# EUROPEAN PATENT SPECIFICATION

(11) **EP 2 797 013 B1**
(45) Date of publication and mention of the grant of the patent: **23.03.2016**
(21) Application number: 14165472.3
(22) Date of filing: 22.04.2014
(51) Int. Cl.: G06F 17/30

(54) **Database update execution according to power management schemes**
Durchführung von Aktualisierungen von Datenbanken abhängig von Leistungsverwaltungpläne
Execution de mises à jours de bases de données en fonction de mode de gestion d'énergie

(30) Priority: 22.04.2013 CN 201310140940; 24.04.2013 US 201313869926; 26.06.2013 CN 201310259984; 30.06.2013 US 201313931995
(43) Date of publication of application: 29.10.2014
(73) Proprietor: SAP SE, 69190 Walldorf (DE)
(72) Inventor: Wang, Bo, 69190 Walldorf (DE)
(74) Representative: Richardt Patentanwälte PartG mbB

(56) References cited:
- US-A1- 2002 083 151
- US-A1- 2007 073 989
- US-A1- 2009 319 474
- Willis Lang ET AL: "Towards Eco-friendly Database Management Systems", , 9 September 2009 (2009-09-09), XP055132513, Retrieved from the Internet: URL:http://arxiv.org/abs/0909.1767 [retrieved on 2014-07-30]
- JAYAPRAKASH PISHARATH ET AL: "Energy management schemes for memory-resident database systems", PROCEEDINGS OF THE THIRTEENTH ACM CONFERENCE ON INFORMATION AND KNOWLEDGE MANAGEMENT , CIKM '04, 8 November 2004 (2004-11-08), page 218, XP055132518, New York, New York, USA DOI: 10.1145/1031171.1031214
- ZICHEN XU ET AL: "Exploring power-performance tradeoffs in database systems", DATA ENGINEERING (ICDE), 2010 IEEE 26TH INTERNATIONAL CONFERENCE ON, IEEE, PISCATAWAY, NJ, USA, 1 March 2010 (2010-03-01), pages 485-496, XP031657854, ISBN: 978-1-4244-5445-7

## Description

### TECHNICAL FIELD

The present disclosure relates generally to data management in enterprise applications that access database systems. More particularly, the present disclosure relates to enhanced management of electrical power consumption by electronic devices configured to update databases via cellular digital telecommunication networks.

### BACKGROUND

Modern databases comprise very big data volumes. Updating of these databases requires a lot of computer resources consuming high electrical power. Proper implementation of database updates enabling reduction in electrical power consumption is especially important when battery powered end terminals being connected to one or more databases via digital telecommunication networks are used. These databases are often used to support data processing applications, such as financials, sales, order fulfillment, manufacturing, human resources, and enterprise resource planning applications.

The manuscript "Towards Eco-friendly Database Management Systems" discloses techniques that can be used by database management systems (DBMS) to directly manage the energy consumption. Both techniques trade energy consumption for performance (Willis Lang et, al., "Towards Eco-friendly Database Management Systems", 4th Biennial Conference on Innovative Data Systems Research (CIDR) January 4-7, 2009, Asilomar, California, USA).

The manuscript "Energy management schemes for memory-resident database systems" discusses power saving opportunities for DBMS. It is argued that query optimization mechanisms in traditional DBMSs could easily miss query plans that are highly power-efficient and yet lead to little degradation of performance (Jayaprakash Pisharath et. al., "Energy management schemes for memory-resident database systems", p. 218, CIKM'04, November 8-13, 2004, Washington, DC, USA).

### SUMMARY

A computer-implemented technology for providing enhanced updating of databases is described herein. As it will be clearly seen from description hereon implementation of data cache enabling bulking of a group of operations related the updating of the database enables reduction in electrical power consumption either of the end terminal configured to perform updating of the database or a database server comprising the database. The reduction in the energy consumption achieved by implementing of the technology of the present invention is especially important when a battery powered end terminal is used for updating of the database via a cellular digital telecommunication network. Further the technology of the present invention provides for a reduction in request-response rounds between the database and the end terminal.

The latter feature is beneficial for any type of connection between the end terminal and the database including cellular digital telecommunication networks. Another distinctive feature/advantage of the present invention is reformatting of data by bulking it in a data cache, i.e. the data cache may be row based, wherein a column based data base communicatively coupled with the data cache. An application may process data stored in the data cache by data rows, while columns of one or more tables in the data cache wherein the data rows are grouped may be used for updating the column based database.

It is an objective of embodiments of the invention to provide for a an end terminal configured to perform updating of a database, a server configured to perform updating of a database, a method for updating a database using an end terminal configured to perform updating of a database, a method for updating a database using a database server configured to perform updating of a database, a computer readable medium having stored thereon computer executable code for execution by a microprocessor controlling an end terminal, wherein execution of the instructions of the executable code cause the microprocessor to execute a computer-implemented method of updating of a database using the end terminal comprising the microprocessor, and a computer readable medium having stored thereon computer executable code for execution by one or more microprocessors controlling a database server, wherein execution of the instructions of the executable code cause the one or more microprocessors to execute a computer-implemented method of updating of a database, wherein the database server comprises the one or more microprocessors.

Said objective is solved by the subject matter of the independent claims. Advantageous embodiments are described in the dependent claims.

In accordance with one aspect the present invention relates to a computer-implemented method of updating of a database using an end terminal comprising a processing unit and a main memory, wherein the database is column based, wherein the database comprises data rows, wherein the end terminal is configured to perform the updating of the database in an electrical power saving mode and in a standard electrical power consumption mode, wherein an electrical power consumption of the end terminal in the electrical power saving mode is lower than an electrical power consumption of the end terminal in the standard electrical power consumption mode, wherein a column-wise bulk updating of the database is performed in the electrical power saving mode and a discrete updating of the database is performed in the normal electrical power consumption mode, the computer-implemented method comprising:
switching the end terminal into the electrical power saving mode;
causing the processing unit to perform the column-wise bulk updating of the database, wherein the causing of the processing unit to perform the column-wise bulk updating of the database comprises:
   generating a data cache in the main memory, wherein a data cache is row based; in response to receiving an insert operation of inserting of a data row to be added to the database inserting the data row to be added to the database into the data cache, wherein the data row to be added to the database is inserted into the database when an update of the database is determined to be necessary;
   in response to receiving an update operation of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
   in the case when the update of the database is determined to be necessary executing a column-wise bulk write operation that writes all data rows in the data cache to the database; and
   wherein the update of the database is determined to be necessary when an overall number of the data rows in the data cache exceeds a first threshold value;
   switching the end terminal into the standard electrical power consumption mode; and
   causing the processing unit to perform the discrete updating of the database, wherein the causing of the processing unit to perform the discrete updating of the database comprises:
      executing the insert operation of inserting of the data row to be added to the database on the database; and
      executing the update operation of the data row to be updated on the database.

These features may be advantageous as they may provide two modes of operation of the end terminal performing updating of the database. In the electrical power saving mode the end terminal performs bulking of operations in the data cache and updating of the database in a format corresponding to a data storage structure in the database. As a result thereof the end terminal addresses the database less frequent than in the standard electrical power consumption mode. Moreover some data rows may be updated only in the data cache, before these data rows are updated in the database.

According to one embodiment a remote terminal comprises the database, wherein the remote terminal is communicatively coupled to the end terminal via a cellular digital telecommunication network, wherein the upload operations, the column-wise bulk write operations, the insert operations, and the update operations are performed via the digital cellular telecommunication network, wherein the end terminal further comprises a wireless terminal being configured to communicatively couple the end terminal to the remote terminal via the cellular digital telecommunication network, wherein the wireless terminal is in an idle mode by default and in an data transmission mode when any one of the following operations is executed via the digital cellular telecommunication network: the upload operation, the column-wise bulk write operation, the update operation, and the insert operation, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

These features may be result further not only in a reduction of the electrical power consumption by the end terminal but in a reduction of a load of the cellular digital telecommunication network. It should be noted that every communication session of when the wireless terminal is in the transmission mode transmits data packets related to execution of the aforementioned operations requires additional operations to be performed. The additional operations like establishing connection with the cellular digital telecommunication network and closing connection with this network require high consumption of the electrical power by the end terminal. Bulking of data transmission, i.e. reduction of connection sessions in the cellular digital telecommunication networks is almost always a precious advantage..

In another embodiment the computer implemented method further comprises after the switching of the end terminal in the electrical power saving mode and before the switching of the end terminal in the normal electrical power consumption mode executing a bulk upload operation that uploads the data base into the main memory, wherein in the computer-implemented method step of the causing of the processing unit to perform the column-wise bulk updating of the database the processing unit is caused to perform the column-wise bulk updating of the database uploaded in the main memory.

This feature enables further reduction of the load of the cellular digital telecommunication network. The database update may be performed in two connection sessions. During a first one the database is uploaded to the end terminal in the second one an updated database is uploaded to the database server. Further these connections sessions may be scheduled upfront, when the cellular digital telecommunication network is not heavily loaded..

In another embodiment a remote terminal comprises the database uploaded into the main memory, wherein the remote terminal is communicatively coupled to the end terminal via a cellular digital telecommunication network, wherein the bulk upload operations, the insert operations, and the update operations are performed via the digital cellular telecommunication network, wherein the end terminal further comprises a wireless terminal being configured to communicatively couple the end terminal to the remote terminal via the cellular digital telecommunication network, wherein the wireless terminal is in an idle mode by default and in an data transmission mode when any one of the following operations is executed via the digital cellular telecommunication network: the bulk upload operation, the update operation, and the insert operation, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

In another embodiment the processing unit comprises one or more microprocessors, wherein at least one microprocessor operates in a microprocessor power saving mode when the end terminal is switched into the electrical power saving mode, wherein the at least one microprocessor operates at the first clock frequency when the at least one microprocessor operates in the microprocessor power saving mode, wherein the at least one microprocessor operates at the second clock frequency when the at least one microprocessor operates not in the microprocessor power saving mode, wherein the second clock frequency is higher than the first clock frequency.

In an example each of the following operations: the upload operation, the column-wise bulk write operation, the insert operation, and the update operation is executed in a framework of a respective communication request-response round between the database and the end terminal, wherein a time average of a number of the communication request-response rounds generated when the end terminal is in the electrical power saving mode is less or equal to a time average number of the communication request-response rounds generated when the end terminal is in the standard electrical power consumption mode.

This feature may be beneficial for any type of data packet based connection between the end terminal and the database. In a case when each update and insert operation are executed separately in a discrete way one data packet may be enough for transmitting an update (insert) instruction based on the respective update (insert) operation to the database. As a result thereof the pay load of these packets may be used inefficiently, i.e. one or more data packets may have bigger fixed data volume that is needed for transmission either insert or update instruction. In another embodiment the causing of the processing unit to perform the discrete updating of the database further comprises executing a delete operation of a data row to be deleted in the database on the database,
wherein the causing of the processing unit to perform the column-wise bulk updating of the database further comprises:
in response to receiving the delete operation of the data row to be deleted in the database on the database executing the delete operation in the data row to be deleted in the data cache in a case when the data cache comprises the data row to be deleted and deleting the data row to be deleted in the database in a case when the database comprises the data row to be deleted.

This feature indicates that the data cache has a reduced functionality and some operations like delete operations are executed directly on the database. In return an implementation of the data cache is simpler and it operates faster, since it does not deal with all types of operations.

In another example, the causing of the processing unit to perform the column-wise bulk updating of the database further comprises:
deleting at least a portion of the data rows in the data cache after the execution of the column-wise bulk write operation, wherein the update of the column based database is determined to be necessary when an overall number of the data rows in the data cache exceeds a first threshold value.

This feature is important for optimization of data traffic between the data cache and the database. A portion of the data rows in the data cache may be used for further updating of the database. In this case it is not necessary to upload these data rows from data base into data cache once again. The data rows, which were not deleted in the data cache after the execution of the column-wise bulk update operation may be the data rows which were most frequently updated before the execution of the column-wise bulk operation.

In another embodiment each data row in the data cache has a respective status value being equal to one of the following values "New", "Old Clean", and "Old Dirty". The status value of each data row inserted into data cache is "New" before the execution of the column-wise bulk write operation. The status value of all data rows is "Old Clean" after the execution of the column-wise bulk write operation. The status value of each data row uploaded into the data cache is "Old Clean" before the updating of the each data row uploaded into the data cache. The status value of each data row having status value "Old Clean" is changed to "Old Dirty" when said data row is updated. At least a portion of the data rows having status value "Old Clean" are deleted when their overall number exceeds a second threshold value.

This feature enables structured management of the data rows stored in the data cache. A portion or all of the data rows may remain in the data cache after executing of the column-wise bulk update operation. During subsequent database update a portion of rows having the status value "Old Clean" may be deleted in the data cache without any need to perform the column-wise update operation. As a result thereof data space in the data cache is freed for storing data rows needed for further updating of the database.

In another embodiment the column based database comprises an in-memory column based database.

This feature enables utilization of fast operating in-memory databases. In-memory database has its data rows stored in a main memory of a computing device. The main memory is a fast memory of the computing device. For instance it may be a DRAM memory (dynamic random access memory).

In another embodiment each data row in the database and in the data cache comprise one or more fields for storing data values and a respective key. Each data row in the data cache has a respective status value being equal to one of the following values "New", "Old Clean", and "Old Dirty". The status value of each data row inserted into data cache is "New" before the execution of the column-wise bulk write operation. The status value of all data rows is "Old Clean" after the execution of the column-wise bulk write operation. The status value of each data row uploaded into the data cache is "Old Clean" before the updating of the each data row uploaded into the data cache. The status value of each data row having the status value "Old Clean" is changed to "Old Dirty" after the updating of said data row in a case when the key of said data row remains unchanged when said data row is updated. The status value of each data row having the status value either "Old Clean" or "Old Dirty" is changed to "New" after the updating of said data row in a case when the key of said data row is updated when said data row is updated. The key of each data row in the data cache having the status value "New" and of each data row in the database uniquely identify the each data row in the data cache having the status "New" and the each data row in the database. Each field is used for storing less than two data values. Each field has a respective field name. Each data row comprises only fields having different names. The data values in the database are grouped in data records by the field names of the fields they are stored in. The data values in the data cache are grouped in data rows by their respective keys. The insert operation is an insert by key operation, the update operation is an update by key operation and the delete operation is a delete by key operation. At least a portion of the data rows having status value "Old Clean" are deleted when their overall number exceeds a third threshold value.

These features enable advanced management of the data rows stored in the data cache in conjunction with keys uniquely identifying the data rows stored in the database. When the key of the data row in the data cache having a status value "Old Clean" is updated it effectively becomes a new data row, i.e. there is no data row in the database having the data row with the updated key. Further these features enable structured management of the data rows stored in the data cache. A portion or all of the data rows may remain in the data cache after executing of the column-wise bulk update operation. During subsequent database update a portion of rows having the status value "Old Clean" may be deleted in the data cache without any need to perform the column-wise update operation. As a result thereof data space in the data cache is freed for storing data rows needed for further updating of the database. In another embodiment each data row in the database and in the data cache comprise one or more fields for storing data values and a respective key, each data row in the database is uniquely identified by its key, wherein each field is used for storing less than two data values and each field has a respective field name, wherein each data row comprises only fields having different names, wherein the data values in the database are grouped in data records by the field names of the fields they are stored in, wherein the data values in the data cache are grouped in data rows by their respective keys, wherein the insert operation is an insert by key operation, the update operation is an update by key operation and the delete operation is a delete by key operation.

These features describe a difference in data format of data rows stored in the database and in the data cache and corresponding measures needed for providing effective data transfer from the data cache to the database.

In another embodiment the causing of the processing unit to perform the column-wise bulk updating of the database is performed by executing a Structured Query Language (SQL) transactional processing, wherein one or more transactions of the transactional processing comprise at least one of the following first operations: the insert operation, the update operation, the delete operation, wherein the update of the database is determined to be necessary in the following cases: committing of the single transaction comprising the one of the first operations is performed, before executing a batch update operation comprising a plurality of the update operations, before executing a batch delete operation comprising a plurality of the delete operations, before executing a SQL general query on the database, or before executing a SQL stored procedure on the database.

These features enable transactional processing for updating the database using the data cache and describe criteria when the update of the database is determined to be necessary.

In another embodiment the causing of the processing unit to perform the column-wise bulk updating of the database is performed by executing a Structured Query Language (SQL) transactional processing, wherein one or more transactions of the transactional processing comprise at least one of the following first operations: the insert operation, the update operation, the delete operation, wherein the update of the database is determined to be necessary in the following cases: before executing a batch update operation comprising a plurality of the update operations, wherein the data cache comprises at least one data row to be updated when the batch update is executed, wherein the at least one data row to be updated has the status value equal to "Old Dirty"; before executing a batch delete operation comprising a plurality of the update operations, wherein the data cache comprises at least one data row to be deleted when the batch update is executed, wherein the at least one data row to be deleted has the status value equal to "Old Dirty"; before executing a SQL general query on the database and at least one data row in the data cache having the status value equal to "Old Dirty"; or before executing a SQL stored procedure on the database and at least one data row in the data cache having the status value equal to "Old Dirty".

These features enable transactional processing for updating the database using the data cache and describe criteria when the update of the database is determined to be necessary.

In another embodiment after the receiving of the insert operation of the data row to be added to the database and before and the inserting the data row to be added to the database into the data cache executing the column-wise bulk write operation that writes all data rows in the data cache to the database in a case when the inserting the data row to be added to the database into the data cache before the executing of the column-wise bulk write operation that writes all data rows in the data cache to the database causes violation of the unique identification of the data rows by their respective keys in the database,
after the receiving of the update operation of the updating of the data row to be updated and before the updating of the data row to be updated in the data cache executing the column-wise bulk write operation that writes all data rows in the data cache to the database in a case when the updating of the data row to be updated in the data cache before the executing of the column-wise bulk write operation that writes all data rows in the data cache to the database causes violation of the unique identification of the data rows by their respective keys in the database.

These features enable avoiding of violation of the unique identification of the data rows by their respective keys in a case when order sensitive operations are executed on the database.

In another embodiment the causing of the processing unit to perform the column-wise bulk updating of the database further comprises:
receiving a query by key operation from an application operating on the end terminal;
in a case when a corresponding data row being uniquely identified by a key specified in the by key query is not found in the data cache, executing the upload operation that uploads the data row being uniquely identified by a key specified in the by key query from the database; and
in a case when the corresponding record is found in the transactional cache, returning the corresponding record to the application.

Another embodiment relates to a computer-implemented method of updating of a database using an end terminal, wherein a database server comprises a processing unit, a main memory and the database, wherein the database is column based, wherein the database comprises data rows, wherein the database server is configured to perform the updating of the database in an electrical power saving mode and in a standard electrical power consumption mode, wherein an electrical power consumption of the end database server in the electrical power saving mode is lower than an electrical power consumption of the database server in the standard electrical power consumption mode, wherein a column-wise bulk updating of the database is performed in the electrical power saving mode and a discrete updating of the database is performed in the normal electrical power consumption mode, the computer-implemented method comprising:
switching the database server into the electrical power saving mode;
causing the processing unit to perform the column-wise bulk updating of the database, wherein the causing of the processing unit to perform the column-wise bulk updating of the database comprises:
   generating a data cache in the main memory, wherein a data cache is row based;
   in response to receiving form the end terminal an insert operation of inserting of a data row to be added to the database inserting the data row to be
   added to the database into the data cache, wherein the data row to be added to the database is inserted into the database when an update of the database is determined to be necessary;
   in response to receiving from the end terminal an update operation of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
   in the case when the update of the database is determined to be necessary executing a column-wise bulk write operation that write sall data rows in the data cache to the database; and
   wherein the update of the database is determined to be necessary when an overall number of the data rows in the data cache exceeds a first threshold value;
   switching the database server into the standard electrical power consumption mode; and
   causing the processing unit to perform the discrete updating of the database, wherein the causing of the processing unit to perform the discrete updating of the database comprises:
      in response to receiving form the end terminal an insert operation of inserting of a data row to be added to the database on the database executing the insert operation of inserting of the data row to be added to the database on the database; and
      in response to receiving from the end terminal an update operation of updating of a data row to be updated on the database executing the update operation of the data row to be updated on the database.

Another embodiment relates to a computer readable medium having stored thereon computer executable code for execution by one or more microprocessors controlling a database server, wherein execution of the instructions of the executable code cause the one or more microprocessors to execute a computer-implemented method of updating of a database, wherein the database server comprises the one or more microprocessors and a main memory, wherein the database is column based, wherein the database comprises data rows, wherein the database server is configured to perform the updating of the database in an electrical power saving mode and in a standard electrical power consumption mode, wherein an electrical power consumption of the database server in the electrical power saving mode is lower than an electrical power consumption of the database server in the standard electrical power consumption mode, wherein a column-wise bulk updating of the database is performed in the electrical power saving mode and a discrete updating of the database is performed in the normal electrical power consumption mode, the computer-implemented method comprising:
switching the database server into the electrical power saving mode;
causing the one or more microprocessors to perform the column-wise bulk updating of the database, wherein the causing of the one or more microprocessors to perform the column-wise bulk updating of the database comprises:
   generating a data cache in the main memory, wherein a data cache is row based;
   in response to receiving an insert operation of inserting of a data row to be added to the database inserting the data row to be added to the database
   into the data cache, wherein the data row to be added to the database is inserted into the database when an update of the database is determined to be necessary;
   in response to receiving an update operation of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
   in the case when the update of the database is determined to be necessary executing a column-wise bulk write operation that writes all data rows in the data cache to the database; and
   wherein the update of the database is determined to be necessary when an overall number of the data rows in the data cache exceeds a first threshold value;
   switching the database server into the standard electrical power consumption mode; and
   causing the one or more microprocessors to perform the discrete updating of the database, wherein the causing of the one or more microprocessors to perform the discrete updating of the database comprises:
      executing the insert operation of inserting of the data row to be added to the database on the database; and
      executing the update operation of the data row to be updated on the database.

Another embodiment relates to an end terminal configured to perform the updating of a database in an electrical power saving mode and in a standard electrical power consumption mode, wherein an electrical power consumption of the end terminal in the electrical power saving mode is lower than an electrical power consumption of the end terminal in the standard electrical power consumption mode, wherein the end terminal comprises a processing unit and a main memory, wherein the database is column based, wherein a column-wise bulk updating of the database is performed in the electrical power saving mode and a discrete updating of the database is performed in the normal electrical power consumption mode, the processing unit is configured to cause the end terminal to perform the following:
switching the end terminal into the electrical power saving mode;
causing the end terminal to perform the column-wise bulk updating of the database, wherein the causing of the end terminal to perform the column-wise bulk updating of the database comprises:
   generating a data cache in the main memory, wherein a data cache is row based;
   in response to receiving an insert operation of inserting of a data row to be added to the database inserting the data row to be added to the database
   into the data cache, wherein the data row to be added to the database is inserted into the database when an update of the database is determined to be necessary;
   in response to receiving an update operation of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
   in the case when the update of the database is determined to be necessary executing a column-wise bulk write operation that writes all data rows in the data cache to the database; and
   wherein the update of the database is determined to be necessary when an overall number of the data rows in the data cache exceeds a first threshold value;
   switching the end terminal into the standard electrical power consumption mode; and
   causing the end terminal to perform the discrete updating of the database, wherein the causing of the processing unit to perform the discrete updating of the database comprises:
      executing the insert operation of inserting of the data row to be added to the database on the database; and
      executing the update operation of the data row to be updated on the database.

Another embodiment relates to a database server configured to perform updating of a database in an electrical power saving mode and in a standard electrical power consumption mode, wherein an electrical power consumption of the database server in the electrical power saving mode is lower than an electrical power consumption of the database server in the standard electrical power consumption mode, wherein the database server comprises a processing unit and a main memory, wherein the database is column based, wherein a column-wise bulk updating of the database is performed in the electrical power saving mode and a discrete updating of the database is performed in the normal electrical power consumption mode, the processing unit is configured to perform the following:
switching the database server into the electrical power saving mode;
causing the database server to perform the column-wise bulk updating of the database, wherein the causing of the database server to perform the column-wise bulk updating of the database comprises:
   generating a data cache in the main memory, wherein a data cache is row based;
   in response to receiving an insert operation of inserting of a data row to be added to the database inserting the data row to be added to the database into the data cache, wherein the data row to be added to the database is inserted into the database when an update of the database is determined to be necessary;
   in response to receiving an update operation of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
   in the case when the update of the database is determined to be necessary executing a column-wise bulk write operation that writes all data rows in the data cache to the database;
      and
   wherein the update of the database is determined to be necessary when an overall number of the data rows in the data cache exceeds a first threshold value;
   switching the database server into the standard electrical power consumption mode; and
   causing the database server to perform the discrete updating of the database, wherein the causing of the database server to perform the discrete updating of the database comprises:
      executing the insert operation of inserting of the data row to be added to the database on the database; and
      executing the update operation of the data row to be updated on the database.

### BRIEF DESCRIPTION OF THE DRAWINGS

Some embodiments are illustrated in the accompanying figures, in which like reference numerals designate like parts, and wherein:
FIG. 1 is a block diagram of an exemplary system;
FIG. 2 is a block diagram of an exemplary architecture;
FIG. 3 shows an exemplary status transition diagram;
FIG. 4 shows another exemplary status transition diagram;
FIG. 5 shows an exemplary method of managing database events;
FIG. 6 shows an exemplary method of version check control during an update of normal fields; and
FIG. 7 shows an exemplary method of version check control during an update of primary key fields.

### DETAILED DESCRIPTION

In the following description, for purposes of explanation, specific numbers, materials and configurations are set forth in order to provide a thorough understanding of the present frameworks and methods. However, it will be apparent to one skilled in the art that the present frameworks and methods may be practiced without the specific exemplary details. In other instances, well-known features are omitted or simplified to clarify the description of the exemplary implementations of present frameworks and methods, and to thereby better explain the present frameworks and methods. Furthermore, for ease of understanding, certain method steps are deline-ated as separate steps; however, these separately delineated steps should not be construed as necessarily order dependent in their performance.

The following description sets forth one or more implementations of systems and methods for facilitating transactional caching. One implementation of the present framework provides various enhancements to a data cache so as to support both read and write operations (e.g., INSERT, UPDATE, etc.).Write operations may be delayed until a flush operation is necessary. The flush operation may be invoked by collecting newly inserted or updated data rows in the enhanced data cache and then writing them to the database using a bulk operation (e.g., column-wise).

Caching generally refers to the temporary storage of data to achieve higher performance in software systems. A data cache temporarily stores the results of a database transaction (i.e. an atomic work unit of database access) to reduce the number of database accesses. Conventional data caches typically achieve performance gain by reducing the number of accesses to the original data row, but do not reduce the number of write operations (e.g., INSERT, UPDATE).In one implementation of the present framework, a bulk operation is combined with an enhanced data cache to reduce both read and write operations in a column-based database, thereby achieving greater performance improvement (e.g., 20% in a typical transaction).

By minimizing the model gap between OLTP's data row-based operations and column-oriented storage, OLTP performance can be improved dramatically. The present framework advantageously increases the applicability of bulk operations for invoking a flush. All INSERT and UPDATE operations executed on the same table in a transaction may benefit from the bulk operation even if they are distributed in different locations. In addition, the data cache is transparent to the OLTP application developer. This means that the performance of the OLTP application may be improved without changing the existing business logic design and implementation.

The framework described herein may be implemented as a method, computer-controlled apparatus, a computer process, a computing system, or as an article of manufacture such as a computer-usable medium. These and various other features will be apparent from the following description.

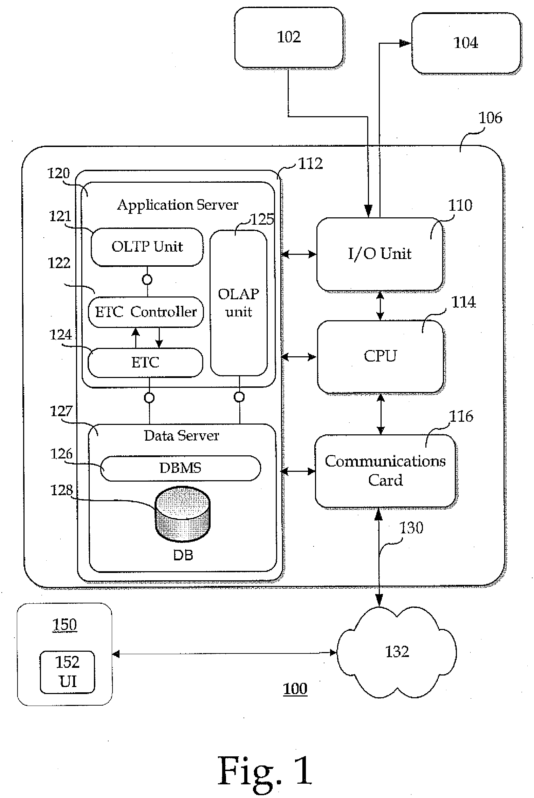

FIG. 1 shows a block diagram illustrating an exemplary system 100 that may be used to implement the framework described herein. System 100 may include a computer system 106 communicatively coupled to an input device 102 (e.g., keyboard, touchpad, microphone, camera, etc.) and an output device 104 (e.g., display device, monitor, printer, speaker, etc.). Computer system 106 also may include a communications card or device 116 (e.g., a modem and/or a network adapter) for exchanging data with network 132 using a communications link 130 (e.g., a telephone line, a wireless network link, a wired network link, or a cable network). Network 132 may be a local area network (LAN) or a wide area network (WAN). The computer system 106 may be communicatively coupled to one or more other computer systems 150 via network 132. For example, computer system 106 may act as a server and operate in a networked environment using logical connections to one or more client computers 150. Client computers 150 may include components similar to the computer system 106, and may be in the form of a desktop computer, mobile device, tablet computer, communication device, etc.

Computing system 106 includes a central processing unit (CPU) 114, an input/output (I/O) unit 110, and a non-transitory memory device 112. Other support circuits, such as a cache, power supply, clock circuits and a communications bus, may also be included in computing system 106. In addifiion, any of the foregoing may be supplemented by, or incorporated in, application-specific integrated circuits. Examples of computing system 106 include a handheld device, a mobile device, a personal digital assistance (PDA), a workstation, a server, a portable laptop computer, another portable device, a mini-computer, a mainframe computer, a storage system, a dedicated digital appliance, a device, a component, other equipment, or some combination of these capable of responding to and executing instructions in a defined manner.

Memory device 112 may be any form of non-transitory computer-readable media, including, but not limited to, dynamic random access memory (DRAM), static random access memory (SRAM), Erasable Programmable Read-Only Memory (EPROM), Electrically Erasable Programmable Read-Only Memory (EEPROM), flash memory devices, magnetic disks, internal hard disks, removable disks, magne-to-optical disks, Compact Disc Read-Only Memory (CD-ROM), any other volatile or non-volatile memory, or a combination thereof.

Memory device 112 serves to store machine-executable instructions, data, and various software components for implementing the techniques described herein, all of which may be processed by CPU 114. As such, the computer system 106 is a general-purpose computer system that becomes a specific purpose computer system when executing the machine-executable instructions. Alternatively, the various techniques described herein may be implemented as part of a software product, which is executed via an application server 120. Each computer program may be implemented in a high-level procedural or object-oriented programming language (e.g., C, C++, Java, Advanced Business Application Programming (ABAP^{™}) from SAP® AG, etc.), or in assembly or machine language if desired. The language may be a compiled or interpreted language. The machine-executable instructions are not intended to be limited to any particular programming language and implementation thereof. It will be appreciated that a variety of programming languages and coding thereof may be used to implement the teachings of the disclosure contained herein.

In one implementation, the memory module 112 of the computer system 106 includes an application server 120 and a data server 127. The application server 120 may store an online transaction processing (OLTP) unit 121, an Enhanced Transactional Cache (ETC) controller or controller of a data cache 122, an ETC or data cache 124, and an online analytical processing (OLAP) unit 125.

OLTP unit 121 may include source code and executable machine code, for performing the functions of a business application. OLTP unit 121 may be designed to perform various transaction-oriented functions, such as customer relationship management (CRM), enterprise resource management (ERP) application, human resource management, enterprise content management (ECM), business process management (BPM), product lifecycle management, and so forth. OLTP unit 121 may be coded using a high-level programming language, such as Java, C++, ABAP^{™}, etc. Other types of programming languages are also useful. OLTP unit 121 generates data (referred to as "transaction data") that may be stored in the computing system 106. Transaction data includes, for example, information relating to the sale of goods (e.g., location, time, price, quantity, etc.), production of goods (e.g., quantity, supplier, raw materials, cost, etc.), telemarketing data, customer support data, and so forth.

Application server 120 may include an OLAP unit 125, including source code and executable machine code, for performing analysis of data. OLAP unit 125 may be designed to perform various business functions, such as business reporting (e.g., for sales, marketing, management, financial, etc.), business process management (BPM), budgeting and forecasting, and so forth. OLAP unit 125 may be coded using a high-level programming language, such as Java, C++, ABAP^{™}, etc. Other types of programming languages are also useful.

In accordance with one implementation, OLTP Unit 121 is communicatively coupled to ETC controller 122.ETC controller 122 manages ETC 124. During initialization, ETC controller 122 creates and configures ETC 124. More particularly, ETC controller 122 may provide configuration, lifecycle management, status management, flush management, query order management, cache size management, version control, and/or other services, which will be described in more detail in the following description.

In one implementation, ETC 124 is a transaction level cache with a life cycle that is the same as a database transaction. In other words, its contents will be cleared when the transaction ends (e.g., commit, roll-back, etc.). Usually, ETC 124 is a component of a "persistence layer", which is a group of software classes that make it easier for a program to persist its state. Since ETC 124 is temporary, consuming a large amount of memory space may be acceptable. However, to avoid using up too much memory space (e.g., when the query has a non-unique key), ETC controller 122 may limit the number of data rows to be cached (e.g., maximum of 100).

Data server 127 may include a database management system (DBMS) 126 and a database 128. DBMS 126 may include a set of programs to define, administer and process the database 128. A user at the client computer 150 may interact with a user interface (UI) 152 to communicate with the database 128 via the application server 120 and the DBMS 126. UI 152 may be a graphical user interface and include optional user interface components such as windows, menus, buttons, check boxes, charts, icons, etc.

In one implementation, database 128 is an in-memory database that relies primarily on the system's main memory for efficient computer data storage. More particularly, the data in the in-memory database resides in volatile memory and is not persistently stored on a hard drive, thereby allowing the data to be instantly accessed and scanned at a speed of several megabytes per millisecond. Some data of the in-memory database, such as the transaction log file, may still be persistently stored for recovery purposes. The in-memory database 128 allows seamless access to and propagation of high volumes of data in real-time. Parallel processing may further be achieved by using a multicore microprocessor 114 in conjunction with the in-memory database 128. In-memory database technology includes systems such as SAP's HANA (high performance analytic appliance) in-memory computing engine.

In one implementation, in-memory database 128 is optimized for both OLAP and OLTP. By consolidating OLAP and OLTP into a single database, a lower total cost of ownership (TCO) may be achieved. Column-based data storage may further be implemented in the in-memory database 128, where data tables are stored as columns of data, in sequence and in compressed memory blocks. This may facilitate faster aggregation of data when calculations are performed on single columns. Alternatively, data row-based data storage is also possible, where a table is stored as a sequence of data rows, each of which contains the fields of one data row. In some implementations, instead of updating entire data rows, only fields that have changed will be updated. This avoids having to lock entire data tables during updates to prevent conflicting modifications to a set of data. High levels of parallelization may be achieved, which is critical to real-time processing of live data streams and performing constant and substantially simultaneous updates.

It should be noted that the different components of the computer system 106 may be located on different physical machines. More particularly, components of the application server 120 and the data server 127 may be implemented on different physical machines or computer systems connected on the network 132. For instance, the OLTP unit 121, ETC controller 122 and ETC 124 may be implemented on one machine, while the OLAP unit 125 and data server 127 may be implemented on another two different physical machines. It should further be appreciated that the different components of the client computer 150 may also be located on the computer system 106.

The components depicted on the Fig. 1 may be located in yet another way on different machines. An end terminal may comprise the input device 102, the output device (monitor) 104, the 110 unit 110, the CPU 114, and main memory configured for generating the data cache 124 therein. The end terminal may further comprise one or all of the following components: a communicationcard 116, a data cache controller 122, the OLAP unit 125, the OLTP unit 121, and the application server 120. The application server is configured to provide execution of various applications including OLTP and OLAP. The communication card is communicatively coupled to the database server 126 comprising a database 128. The database may be in-memory database. The database server may further comprise the DBMS 126. The communicative coupling of the end terminal to the database server may be implemented via a computer network or a cellular digital telecommunication network. The communications card 116 may be a wireless terminalenabling communicative coupling of the end terminal with the database server via the cellular digital telecommunicationnetwork.

The components depicted on the Fig. 1 may be located in yet another way on different machines. An end terminal may comprise the input device 102, the output device (monitor) 104, the I/O unit 110, and the CPU 114. The end terminal may further comprise one or all of the following components: a communication card 116, the OLAP unit 125, the OLTP unit 121. The communication card is communicatively coupled to the database server 126 comprising a database 128, a data cache 124. The database may be in-memory database. The database server may further comprise the DBMS 126 and/or the data cache controller 122. The communicative coupling of the end terminal to the database server may be implemented via a computer network or a cellular digital telecommunication network. The communications card 116 may be a wireless terminal enabling communicative coupling of the end terminal with the database server via the cellular digital telecommunication network.

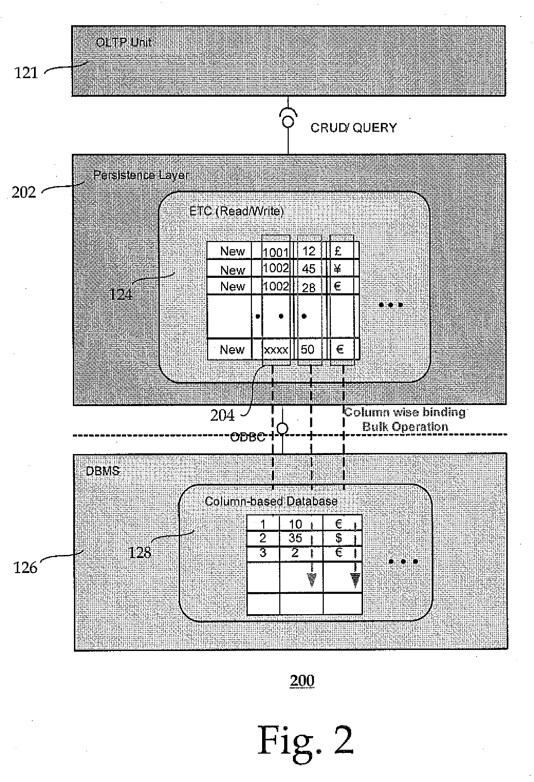

FIG. 2 is a block diagram of an exemplary architecture200 of the present framework. The architecture 200 may be implemented in the computer system 106, or in different physical machines or computer systems connected on network 132, as previously described with reference to FIG. 1. It should be noted that in the following discussion, reference will be made, using like numerals, to the features described in FIG. 1.

In one implementation, the OLTP unit 121 communicates with the persistence layer 202. The persistence layer 202 may include an ETC 124 that serves as a proxy for database 128 and delays execution of both read and write accesses until a flush is determined to be necessary. A "Flush" generally refers to the action of writing dirty data rows in the ETC 124 to the database 128. To perform a flush, a bulk operation interface may be implemented. A "bulk operation" generally refers to the execution of multiple database access operations as a batch (or single unit of work). The bulk operation may be performed to write all newly inserted or old updated data rows in the ETC 124 to the database 128. By using a bulk operation, the number of "roundtrips" of data between the application server 120 and the database128is reduced and performance is advantageously enhanced.

If the database 128 is column-based (as shown in FIG. 2), the bulk operation may be column-wise binding. A column-wise binding bulk operation binds one array to each column 204 for which data is returned from the ETC 124. For example, a column-wise binding bulk insert operation adds columns of data in the ETC 124 into respective columns of a table in the column-based database 128. Column-wise binding is particularly useful in improving the performance of column-oriented in-memory databases.

Data structuring in the column based database and row based data cache may be organized as follows. Each data row in the database and in the data cache comprise one or more fields for storing data values and a respective key. Each data row in the column based database is uniquely identified by its respective key. Each field is used for storing less than two data values and each field has a respective field name. Each data row comprises only fields having different names. The data values in the column based database are grouped in data records by the field names of the fields they are stored in. On contrary the data values in the data cache are grouped in data rows by their respective keys. This key identification enables performing of operations (such as but not limited to update, delete, insert, etc.) on the column based database by key.

An end terminal may be configured to perform the updating of a column based database in an electrical power saving mode and in a standard electrical power consumption mode. An electrical power consumption of the end terminal in the electrical power saving mode is lower than an electrical power consumption of the end terminal in the standard electrical power consumption mode. The end terminal comprises a processing unit 114 and a main memory. A column-wise bulk updating of the column based database is performed in the electrical power saving mode and a discrete updating of the column based database is performed in the normal electrical power consumption mode. The processing unit is configured to cause the end terminal to perform the following: switching the end terminal into the electrical power saving mode, and causing the end terminal to perform the column-wise bulk updating of the database, switching the end terminal into the standard electrical power consumption mode, and causing the end terminal to perform the discrete updating of the database.

The causing of the end terminal to perform the column-wise bulk updating of the database comprises:generating a row based data cache 124 in the main memory; in response to receiving an insert operation of inserting of a data row to be added to the column based database on the column based database inserting the data row to be added to the column based database into the data cache, wherein the data row to be added to the database is inserted into the database when an update of the database is determined to be necessary; in response to receiving an update operation of updating of a data row to be updated on the column based database updating the data row to be updated in therow based data cache and in a cache miss case when the row based data cache does not comprise the data row to be updated executing an upload operation that uploads the data row to be updated into the row based data cache from the column based database before the updating of the data row to be updated in the row based data cache, wherein the data row to be updated is updated in the column based database when an update of the database is determined to be necessary; and in the case when the update of the database is determined to be necessary executing a column-wise bulk write operation that writesall data rows in the data cache to the database.

The causing of the end terminal to perform the discrete updating of the column based database comprises: executing the insert operation of inserting of the data row to be added to the column based database on the column based database; and executing the update operation of the data row to be updated on the column based database.

Alternatively a database server may be configured to perform updating of a column based database in an electrical power saving mode and in a standard electrical power consumption mode. An electrical power consumption of the database server in the electrical power saving mode is lower than an electrical power consumption of the database server in the standard electrical power consumption mode. The database server comprises a processing unit and a main memory. A column-wise bulk updating of the column bases database is performed in the electrical power saving mode and a discrete updating of the column based database is performed in the normal electrical power consumption mode. The processing unit is configured to perform the following: switching the database server into the electrical power saving mode, causing the database server to perform the column-wise bulk updating of the column based database, switching the database server into the standard electrical power consumption mode; and causing the database server to perform the discrete updating of the column based database.

The causing of the database server to perform the column-wise bulk updating of the column based database comprises: generating a row based data cache in the main memory; in response to receiving an insert operation of inserting of a data row to be added to the column based database on the column based database inserting the data row to be added to the database into the row based data cache, wherein the data row to be added to the column based database is inserted into the column based database when an update of the database is determined to be necessary; in response to receiving an update operation of updating of a data row to be updated on the column based database updating the data row to be updated in the row based data cache and in a cache miss case when the row based data cache does not comprise the data row to be updated executing an upload operation that uploads the data row to be updated into the row based data cache from the column based database before the updating of the data row to be updated in the row based data cache, wherein the data row to be updated is updated in the column based database when an update of the column based database is determined to be necessary; and in the case when the update of the column based database is determined to be necessary executing a column-wise bulk write operation that writes all data rows in the row based data cache to the column based database.

The causing of the database server to perform the discrete updating of the column based database comprises: executing the insert operation of inserting of the data row to be added to the column based database on the column based database; and executing the update operation of the data row to be updated on the column based database.

The causing of the database server to perform the discrete updating of the column based database and the causing of the end terminal to perform the discrete updating of the column based database may further comprise executing a delete operation of a data row to be deleted in the column based database on the database. The causing of the database server to perform the column-wise bulk updating of the column based database and the causing of the end terminal to perform the column-wise bulk updating of the database may further comprise in response to receiving the delete operation of the data row to be deleted in the column based database on the column based database executing the delete operation of the data row to be deleted in the row based data cache in a case when the row based data cache comprises the data row to be deleted and deleting the data row to be deleted in the column based database in a case when the column based database comprises the data row to be deleted.

The causing of the database server to perform the column-wise bulk updating of the column based database and the causing of the end terminal to perform the column-wise bulk updating of the database may further comprise deleting at least a portion of the data rows in the row based data cache after the execution of the column-wise bulk write operation, wherein the update of the column based database is determined to be necessary when an overall number of the data rows in the row based data cache exceeds a first threshold value.

A remote terminal may comprise the column based database 128. The remote terminal is communicatively coupled to the end terminal via a cellular digital telecommunication network. The upload operations, the column-wise bulk write operations, the insert operations, and the update operations are performed via the digital cellular telecommunication network. The end terminal further comprises a wireless terminal being configured to communicatively couple the end terminal to the remote terminal via the cellular digital telecommunication network. The wireless terminal is in an idle mode by default and in a data transmission mode when any one of the following operations is executed via the digital cellular telecommunication network: the upload operation, the column-wise bulk write operation, the update operation, and the insert operation. An electrical power consumption of the wireless terminal in the idle mode is lower than an electrical power consumption of the wireless terminal in the data transmission mode. The electrical power consumption of the end terminal in the electrical power saving mode and in the standard electrical power consumption mode comprises the electrical power consumption of the wireless terminal in the idle mode when the wireless terminal is in the idle mode. The electrical power consumption of the end terminal in the electrical power saving mode and in the standard electrical power consumption mode comprises the electrical power consumption of the wireless terminal in the data transmission mode when the wireless terminal is in the data transmission mode. Alternatively the column database may be uploaded into the main memory via the cellular digital telecommunication network by executing a bulk upload operation when the end terminal is caused to operate in the power saving mode. Afterwards the updated column based database is uploaded to the remote terminal using a bulk down load operation. The bulk upload and download operation are performed in the same way as aforementioned operations (the upload operation, the column-wise bulk write operation, the update operation, and the insert operation).

The processing unit comprises one or more microprocessors. At least one microprocessor operates in a microprocessor power saving mode when the end terminal is switched into the electrical power saving mode. The at least one microprocessor operates at the first clock frequency when the at least one microprocessor operates in the microprocessor power saving mode, wherein the at least one microprocessor operates at the second clock frequency when the at least one microprocessor operates not in the microprocessor power saving mode, wherein the second clock frequency is higher than the first clock frequency.

Each of the following operations: the upload operation, the column-wise bulk write operation, the insert operation, the bulk upload operation, the bulk download operation, and the update operation may be executed in a framework of a respective communication request-response round between the database and the end terminal. A time average of a number of the communication request-response rounds generated when the end terminal is in the electrical power saving mode is less or equal to a time average number of the communication request-response rounds generated when the end terminal is in the standard electrical power consumption mode. The communicative coupling between the end terminal and the remote terminal may be performed via the communication request-response rounds.

For instance, the request part of a request-response round corresponding to execution of the insert operation of a data row to be inserted in the database may be an instruction of the end terminal addressed to the database server on the remote terminal to insert the data row to be inserted into the database. The response part of this request-response round may be a message of the database server addressed to the end terminal comprising a either a conformation that the instruction is successfully completed or an error message indicating a failure caused by execution of the instruction.

The bulk operation interface may be implemented using Open Database Connectivity (ODBC), which is a standard C programming language middleware Application Programming Interface (API) for accessing the DBMS 126. Other types of interfaces may also be used. An exemplary Open Database Connectivity (ODBC) routine may be invoked with the following statements:
SQLSetStmtAttr (*m_pStatement, SQL_ATTR_PARAM_BIND_TYPE, SQL_PARAM_BIND_BY_COLUMN, 0);
SQLSetStmtAttr (*m_pStatement, SQL_ATTR_PARAMSET_SIZE, reinterpret_cast<SQLPOINTER> (bindRowCount), 0);

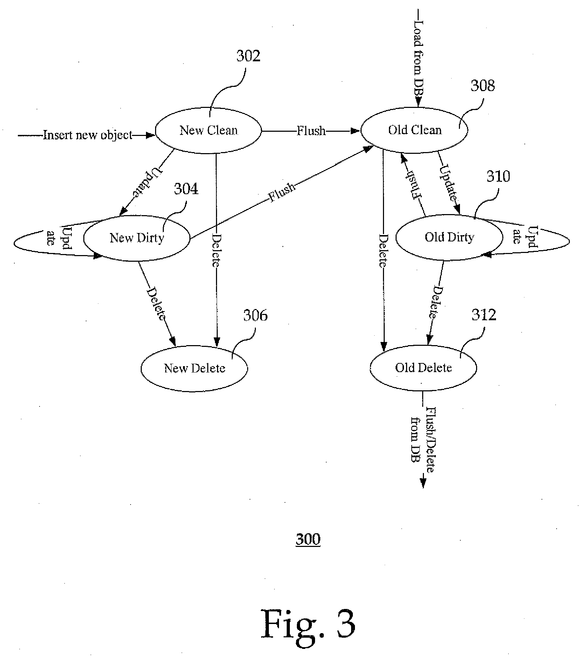

FIG. 3 shows an exemplary status transition diagram 300 of a data row in the ETC 124. In order to support both read and write operations, each data row may be associated with six possible statuses. Each data row in the ETC 124 may include the memory address to which the entry corresponds, the value read or written, a status value that indicates whether the entry is New (requested by user to be added, but not inserted into database yet), Old (data row loaded from database), Clean (not changed since it is added into cache), Dirty (changed by user since it is added into cache), Delete (requested by user to be deleted, but not executed on database yet), or a combination thereof.

As shown by the status transition diagram 300, there are six possible statuses (302, 304, 306, 308, 310, 312) for each data row: New Clean, New Dirty, New Delete, Old Clean, Old Dirty and Old Delete. The transition from one status to another may be initiated in response to an event (indicated along each transition arrow). An event may triggered by receiving a database access operation (e.g., Insert, Delete, etc.).

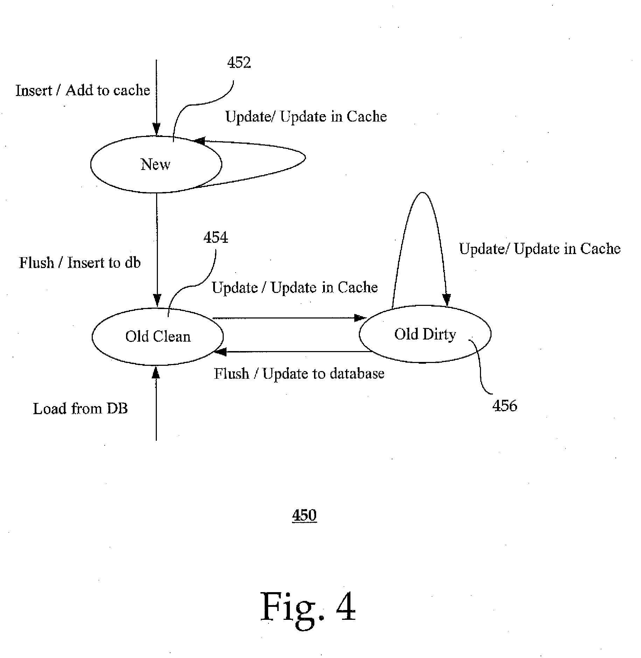

FIG. 4 is another exemplary status transition diagram 450. As shown, the number of possible statuses (452, 454, 456) of each data row is three: New, Old Clean and Old Dirty. Each transition arrow is labeled with an Event/Action. The transition from one status to another is initiated by the occurrence of each respective Event/Action. For example, when the user requests to insert a data row to the database, the ETC controller 122 adds the data row to the ETC 124 and sets the status of the data row in the ETC 124 to "New".

It should be appreciated that the status transition diagram 450 is a simplified implementation of the status transition diagram 300. Since the Delete operation is rarely used in a business application, the "NewDelete" and "OldDelete" statuses (306 and 312) may be removed. A Write-through-DB policy may be defined for the Delete operation. The Write-through-DB policy indicates that the entry is deleted directly from the database 128 in response to receiving a Delete instruction. In addition, the corresponding entry may also be removed from the ETC 124. The "New Clean" and "New Dirty" statuses (302 and 304) may be combined into a "New" status 452. A Write-Delay policy may be implemented for Insert and Update operations. The Write-Delay policy indicates that the entry is temporarily stored in the ETC 124 and its status set to "New."

The set of status values New", "Old Clean", and "Old Dirty of the data rows in the row based data cache as depicted on the status transition diagram 450 may be used for the row based data cache management. For instance, at least a portion of the data rows in the row based data cache having status value "Old Clean" may be deleted when their overall number exceeds a second threshold value.

The functionalities of the status diagram 450 may be further extended in a combination with the primary key tracking/analysis. According to status diagram 450 all data rows uploaded into cache may have either "Old Dirty" status value or "Old clean" status value. Since the key is used for unique identification of data rows in the database and of data rows in the data cache having status value "New", updating/changing of a key of a data row in the data cache having the status value either "Old Dirty" or "Old clean" means effectively a creation of the new data row in the data cache. That is why the relation between the status values "Old Dirty" and "Old Clean" on the status diagram 450 may be extended by employing the following rules: a) the status value of the data row is changed from "Old Clean" to "Old Dirty"

when the data row is updated and a key of the data row is not changed when the data row is updated; b) the status value of the data row is changed from "Old Dirty" to "New" when the data row is updated and a key of the data row is changed/updated when the data row is updated; c) the status value of the data row is changed from "Old Clean" to "New" when the data row is updated and a key of the data row is changed/updated when the data row is updated.

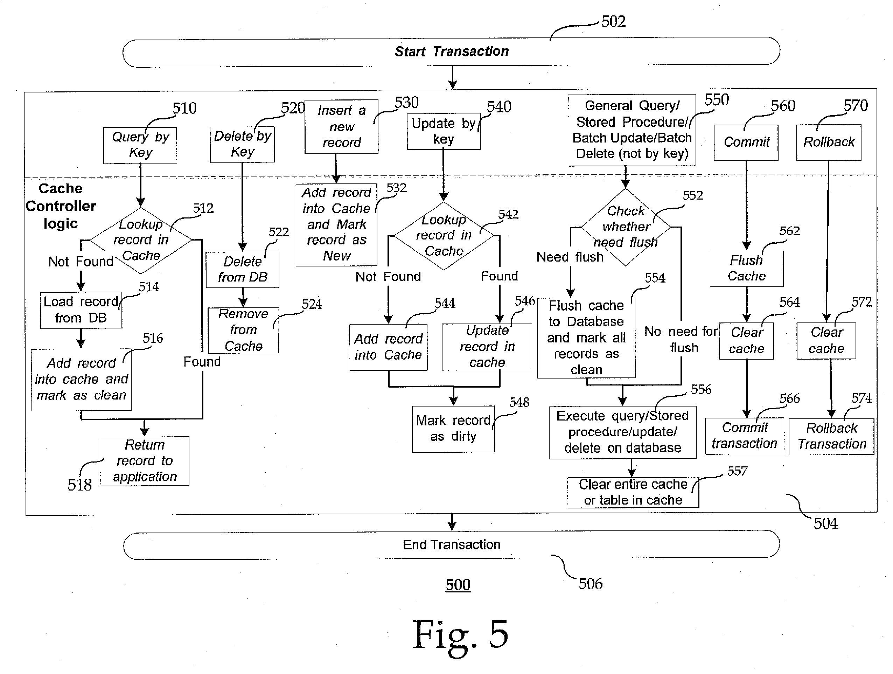

FIG. 5 shows an exemplary method 500 of managing database events. At 502, the database transaction starts. A database transaction is a sequence of database operations (e.g., SQL) that the DBMS 126 treats as a unit. A transaction brings the database 128 from one consistent state to another, and may be initiated by a user or business application.

At 504, a request to execute one or more database operations is received. The ETC controller 122 handles each operation and takes actions accordingly to the various sub-routines shown.

At 510, a Query by Key operation is received. The key used in such query may be a primary key or partial key. At 512, when a Query by Key operation is executed, the ETC controller 122 looks up the data row in the ETC 124. If the data row is not found in the ETC 124, at 514, it is loaded from the database 128. At 516, the data row is added into the ETC 124 and its status is set to Clean. If the data row is found in the ETC 124, the cache data row is returned to the user or business application(or OLTP unit) at 518.

At 520, a Delete by Key statement is received. As mentioned previously, a Write-through-DB policy may be defined for the Delete operation. At 522, the data row corresponding to the key is deleted directly from the database 128. At 524, the corresponding entry in the ETC 124 may also be removed.

At 530, an Insert statement is received. At 532, the new data row is added to the ETC 124 and its status is marked as "New."

At 540, an Update by Key statement is received. At 542, the ETCcontroller 122 looks up the data row corresponding to the key in the ETC 124. If the corresponding data row is not found, at 544, the ETC controller 122 adds the data row into the ETC 124. If the corresponding data row is found, at 546, the data row in the ETC 124 is updated. At 548, if the previous status is "Clean" or "Dirty," the data row in the ETC 124 is marked as "Dirty" to indicate that it needs to be used to update an existing data row in the database. If the previous status is "New", the status remains unchanged.

At 550,a General Query, Stored Procedure, Batch Update (not by key) or a Batch Delete (not by key) is received. At 552, the ETC controller 122 checks to see if a Flush is required. To make sure that the flush is effective and the flush order is correct, the ETC controller 122 may implement a policy to determine the necessity of a flush.

For instance, a Flush may be invoked before some general query is executed because some query results may be affected by any newly inserted or old dirty data rows in the ETC 124. The ETC controller 122 may check to see whether a flush is necessary before the general query is executed. A flush may be necessary if the general query is related to aview, A view generally refers to a query accessible as a virtual table in the database. In addition, a flush may also be necessary if there is any newly inserted or old dirty data row in the ETC 124 that is associated with a table that is related to the general query (e.g., SQL table JOIN, sub-query, etc.). It should be noted that these conditions may also be checked before a Stored Procedure, Batch Update (not by key) or a Batch Delete (not by key) is executed.

If a Flush is determined to be necessary, at 554, the ETC controller 122 collects all newly inserted and old dirty data rows in the ETC 124 according to, for example, table name. The ETC controller 122 then inserts or updates the database 128 with the collected data rows so as to synchronize the database 128 with the ETC 124.

This may be achieved by a bulk operation (e.g., column-wise binding bulk operation). The newly inserted and old dirty data rows in the ETC 124 are then marked as clean. If a Flush is determined to be unnecessary, the process continues at step 556, where the General Query, Stored Procedure, Batch Update or Batch Delete is executed on the database 128. At 557, in the case of a Stored Procedure, the entire ETC 124 is cleared. In the case of a Batch Update or a Batch Delete, the associated table in ETC 124 is cleared.

At 560, a COMMIT is initiated to complete the transaction and retain the changes in the database 128. Committing the transaction causes the ETC 124 to be flushed at 562. The ETC 124 is then cleared at 564, and the transaction is successfully committed at 566.

At 570, a ROLLBACK is initiated to return the database 128 to the state it was in before the transaction began. Rolling back the transaction causes the ETC 124 to be cleared at 572. The transaction is then successfully rolled-back at 574.

At 506, the transaction ends. The transaction may be terminated by either a COMMIT or a ROLLBACK event.

As discussed previously, the ETC controller 122 may execute a bulk operation to flush the ETC 124. A flush may occur in the following cases: (1) When a transaction is committing; (2) Before some general query is executed; (3) Before some batch update is executed; (4) Before some batch delete is executed; (5) Before all stored procedures are executed; and (6) When developer requests to flush by calling Flush() explicitly.

Since a flush delays the execution of Insert and Update operations, the execution order of query statements may also change. The modification of the execution order may cause some issues with order-sensitive query statements and raise a constraint violation (or expression evaluation error).

A constraint may refer to a rule that restricts values in a database. For instance, an SQL database server may allow five types of constraints to be defined: (1) NOT NULL constraint; (2) unique index constraint; (3) primary key constraint; (4) reference integrity (or foreign key) constraint; and (5) check constraint. Other types of constraints may also be defined. A NOT NULL constraint prohibits a database value from being null. A unique index constraint prohibits multiple data rows from having the same value in the same column or combination of columns but allows some values to be null. A primary key constraint combines a NOT NULL constraint and a unique constraint in a single declaration. A reference integrity constraint requires values in one table to match values in another table. A check constraint requires a value in the database to comply with a specified condition.

Examples of order-sensitive query statements that may raise constraint violations include Update statements that change either the primary key, unique index or foreign key, Insert and Delete statements. Modifying the execution order of these statements may cause the database server to raise an exception/error.

For instance, if the execution order of Update and Insert statements is modified, three types of scenarios may occur. In the first scenario, the column of a unique index may be updated as follows:
OITM table: ItemCode column comprises primary keys of data rows and **ItemName** column comprises unique names of items, i.e. the database will raise an exception/report an error when a data row comprising a data item name being already stored in the table is attempted to be generated in the table.
Suppose there is already one data row in the **OITM** table: '1001', `cpu'....
S1: Update **OITM**set **ItemName**='memory' where **Itemcode**='1001'
S2: Insert into **OITM** values ('1002', 'cpu',...)

If the statement S1 is executed before the statement S2, the statements will be executed successfully. However, if the statement S1 is executed after the statement S2, execution of the statement S2 will raise an exception due to a unique index constraint violation, because after execution of the statement S2 and before execution of the statement S1 ItemName column has to comprise two data rows having the same data values 'cpu'.

In the second scenario, the column of a foreign keymay be updated as follows:
**ORDR** table: **OrderID** is primary key.
**RDR1** table: **(Itemcode, OrderID)** is primary key. **OrderID** is foreign key referring to **ORDR.**
Suppose there is already one data row in the ORDR table: 'R001', .....
S1: Update **ORDR** set **OrderID**='R002'where **OrderID**='R001'
S2: Insert into **RDR1** values ('R002', 'cpu',...)

If the statement S1 is executed before the statement S2, the statements will be executed successfully. However, if the statement S1 is executed after the statement S2, execution of the statement S2 will raise an exception due to a foreign key constraint violation, because execution of the statement S2 before the statement S1 causes creation of a data row in the RDR1, wherein this data row comprises 'R002' being a foreign key linking this data row to a not yet existing data row in the ORDR table having 'R002' as primary key.

In the third scenario, the column of a foreign key may be updated as follows:
**ORDR** table: **OrderID** is primary key.
**RDR1** table: (**ItemCode**, **OrderID)** is primary key. **OrderID** is foreign key referring to **ORDR.**
Suppose there is already one data row in the RDR1 table, comprising `R001' as foreign key referring to a data row in ORDR.
S1: Update **RDR1** set **OrderID=**'R002' where **OrderID=**'R001'
S2: Insert into **ORDR** values ('R002', 'cpu',...)

If the statement S1 is executed after the statement S2, the statements will be executed successfully. However, if the statement S1 is executed before the statement S2, execution of the S1 statement will raise an exception due to a foreign key constraint violation, because execution of the statement S1 before the statement S2 causes creation of an updated data tow having 'R002'as foreign key referring to a not yet existing data row in the ORDR table.

In another example, modifying the execution order of different Update operations may also raise constraint violations. For instance, the column of a unique index may be updated as follows:
**OITM table: ItemCode** is primary key and **ItemName** is unique column. Suppose there is already one record in the **OITM** table: 'I001', 'cpu1'...., 'I002', 'cpu2'....
S1: Update **OITM**set **ItemName=**'cpu2' where **ItemCode**='I001'
S2: Update **OITMset ItemName=**'cpu3' where It**emCode**='I002'

If the statement S1 is executed after the statement S2, the statements will be executed successfully. However, if the statement S1 is executed before the statement S2, execution of the statement S1 will raise an exception due to a unique index constraint violation, because after execution of the statement S1 and before the statement S2 the OITM has to comprise two data rows having the same data value 'cpu2' in the column used for storing only unique data values, i.e. two data vales 'cpu2' are forbidden in this column.

To address such possible constraint violations, the ETC controller 122 may apply a Write-through-DB policy for order-sensitive Delete statements. The Write-through-DB policy directly removes the data row from the database 128. More particularly, the Write-through-DB policy executes database access operations directly on the database 128, instead of first accessing the cache (e.g., marking data row as delete) and delaying access operations until a flush is invoked. For order-sensitive Update and Insert statements, the ETC controller 122 may maintain the original execution order of the statements when they first entered the ETC 124.As for other issues caused by incorrect flush order, the user may explicitly call Flush to ensure correct business logic. Such cases are typically very rare in most business applications. Avoiding the aforementioned constraint violations may be implemented as follows. After the receiving of the insert operation of the data row to be added to the database and before and the inserting the data row to be added to the database into the data cache executing the column-wise bulk write operation that writes all data rows in the data cache to the database in a case when the inserting the data row to be added to the database into the data cache before the executing of the column-wise bulk write operation that writes all data rows in the data cache to the database causes violation of the unique identification of the data rows by their respective keys in the database. after the receiving of the update operation of the updating of the data row to be updated and before the updating of the data row to be updated in the data cache executing the column-wise bulk write operation that writes all data rows in the data cache to the data base in a case when the updating of the data row to be updated in the data cache before the executing of the column-wise bulk write operation that writes all data rows in the data cache to the database causes violation of the unique identification of the data rows by their respective keys in the database. The ETC controller 122 may also perform other functions, such as data version management. One data version management strategy is to use backup buffers for version check control. Backup buffers serve to save a copy of the original contents of the data associated with the database 128. Since the contents of the backup buffers are loaded from database, they may be used to check which fields are modified by comparing the data and backup buffers. Backup buffers may also be used to check whether the data row is updated by other clients when a flush happens. If the backup buffers' contents are different from the database data rows in the data buffers, it means that a newer version has been committed after such data rows are cached. The current transaction should be a rollback and a concurrent exception should be thrown/ raised.

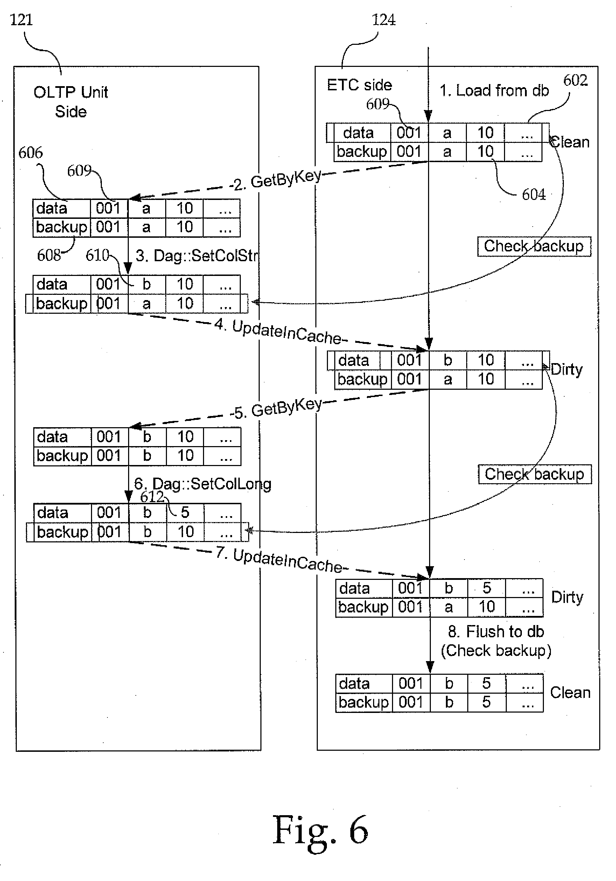

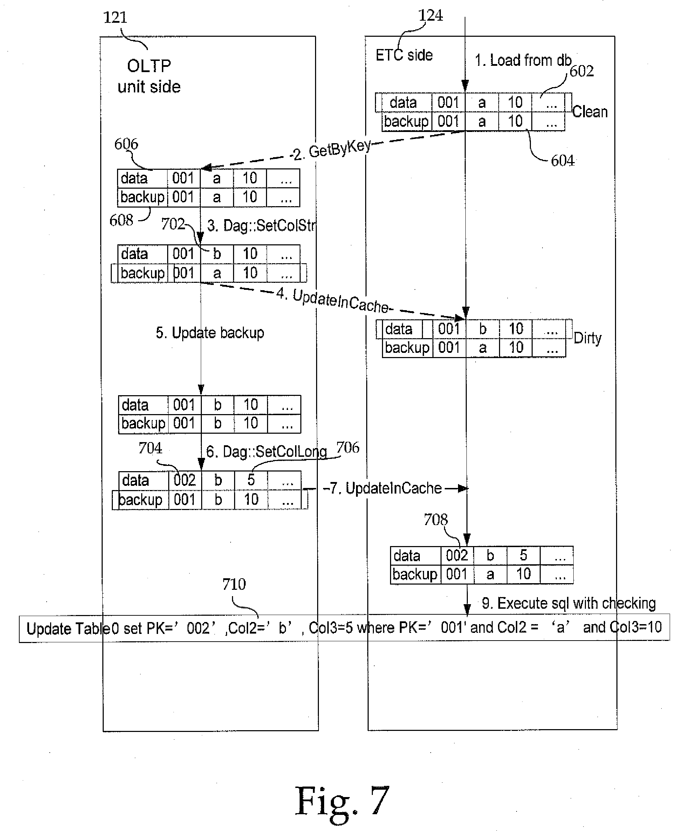

FIGS. 6 and 7 illustrate how the OLTP unit 121 interacts with the ETC 124 to implement version check control using backup and data buffers. As shown, each pair of data rows is a combination of data and backup buffers, and is associated with a data row in the database 128. The data rows in the OLTP unit121side are allocated to the application layer and used to perform transaction-related functions, while the data rows on the ETC 124 side are cached inside the persistence layer. As discussed previously, ETC 124 acts as a proxy for the database 128.

More particularly, FIG. 6 shows an exemplary method of version check control during an update of only normal fields. A normal field generally refers to a column of a relational table that is not a primary key. In this example, the first column of the tables stored in the first and second data buffers (602 and 606) and first and second backup buffers (604 and 608) holds the primary key 609, which identifies a data row in the tables.

At Step 1, a data row (e.g., data row in a table or other data element) may be loaded from the database 128 to the ETC 124. When this happens, the first data buffer 602 may store the database data row, while the contents of the first data buffer 602 are copied to the first backup buffer 604. The status of the data row is set to Clean.

At Step 2, a GetByKeystatement may be called by the user to "Query by Key" or retrieve the data row whose key field matches a specified key expression (e.g., 001). Since the status of the data row is Clean, the ETC data row may be returned to the OLTP unit 121 and stored in the second data buffer 606. The second backup buffer 608 may also store a copy of the data row.

At Step 3, a Dag::SetColStr statement may be called by the user to change a string value in a normal field 610 of the table contained in the second data buffer. In such case, the second backup buffer may contain a different or old copy of the data row. At Step 4, a Dag::Update statement may be called by the user to update the ETC 124 or database 128. In response to this statement, the ETC controller 122 may invoke an UpdateInCache statement. If the data row is found in the ETC 124, the data row in the second data buffer 606 is copied to the first data buffer 602. The status of the data row is then set to Dirty. If the Checkbackup flag is true, the second backup buffer 608 is then compared with the first data buffer 602. If the contents of the second backup buffer 608 and the first data buffer 602 are different, an error is reported.

At Step 5, a GetbyKey statement may be called by the user to retrieve the data row again. In response, the data row in the first data buffer 602 is returned and stored in the second data buffer 606. A copy of the data row is copied from the second data buffer 606 to the second backup buffer 608. At Step 6, a DAG::SetCaILang statement may be called by the user to change a long integer value in a normal field 612 of the table contained in the second data buffer 606. The contents in the second backup buffer 608 may then be different from the contents in the second data buffer 606.

At Step 7, a Dag::Update statement may be called again by the user to update the ETC 124 or database 128. In response to this statement, the ETCcontroller 122 may invoke an UpdatelnCache statement. If the data row is found in the ETC 124, the data row in the second data buffer 606 is copied to the first data buffer 602. The status of the data row remains as Dirty. If the Checkbackup flag is true, the second backup buffer 608 is then compared with the first data buffer 602. If the contents of the second backup buffer 608 and the first data buffer 602 are different, an error is reported.

At Step 8, a Flush to database statement is invoked. The first backup buffer 604 is first checked to determine if it contains the same dirty data row as the first data buffer 602. If it does not, the contents of the first data buffer 602 are copied to the first backup buffer 604. The dirty data row in the first data buffer 602 is flushed to the database 128 and the status of the data row is set to Clean.

FIG. 7 shows an exemplary method of version check control during an update of primary key fields. It should be noted that such method may also be applied during an update of other fields, such as unique index or foreign key fields. As shown, first data and backup buffers are allocated to the ETC 124, and second data and backup buffers are allocated to the OLTP unit 121 (or business application). The first data buffer 602 temporarily holds data while the data is being moved from the ETC 124 to the database 128 or vice versa. The second data buffer 606 temporarily holds data while the data is being moved from the OLTP unit 121 to the ETC 124 or database 128. In this example, the first column of the tables stored in the first and second data and backup buffers holds the primary key, which identifies each data row in the tables.

At Step 1, a data row (e.g., data row in a table or other data element) may be loaded from the database 128 to the ETC 124. When this happens, the first data buffer 602 may store the data row, while the contents of the first backup buffer may be copied from the first data buffer 602 to the first backup buffer 604. The status of the data row is set to Clean.

At Step 2, a GetByKey statement may be called by the user to "Query by Key" or retrieve the data row whose key field matches a specified key expression (e.g., 001). Since the status of the data row is Clean, the data row may be returned to the OLTP unit 121 and stored in the second data buffer 606. The second backup buffer 608 may also contain a copy of the data row.

At Step 3, a Dag::SetColStr statement may be called by the user to change a string value in a normal field 702 of the table contained in the second data buffer 606. In such case, the second backup buffer 608 may contain a different or an old copy of the data row.

At Step 4, a Dag::Update statement may be called by the user to update the ETC 124 or database 128. In response to this statement, the ETC controller 122 may invoke an UpdatelnCache statement. If the data row is found in the ETC 124, the data row in the second data buffer 606 is copied to the first data buffer 602. The status of the data row is then set to Dirty. If the Checkbackup flag is true, the second backup buffer 608 is then compared with the first data buffer 602. If the contents of the second backup buffer 608 and the first data buffer 602 are different, an error is reported.

At Step 5, the second backup buffer 608 may also be updated with the contents of the second data buffer 606 in response to the Dag::Update statement.

At Step 6, a DAG::SetColLong statement may be called by the user to change a long integer value in a key field 704(e.g., from 001 to 002) and a normal field 706 (e.g., from 10 to 5) of the table contained in the second data buffer 606. The contents in the second backup buffer 608 may then be different from the contents in the second data buffer 606.

At Step 7, a Dag::Update statement may be called again by the user to update the ETC 124 or database 128. In response, the ETCcontroller 122 may invoke an Up-dateInCache statement. When the ETC controller 122 finds that the primary key field 708 has been updated, it compares the second backup buffer 608 with the contents of the first data buffer 602 to check if they are the same. If they are the same, it means that the original version of the data row in the OLTP unit 121 is the current version, and it is therefore safe to override the cached data row in the ETC 124 with the data row in the OLTP unit 121. Accordingly, the first data buffer 602 in the ETC 124 will be updated by the second data buffer 606 on the OLTP unit 121 side, and this ETC data row may be used to execute update statements when flush is invoked.

At Step 8 (not shown), the ETC controller 122 may execute the update query statement 710 for the new data row. To improve performance, the query statement may be executed with a checking condition (e.g., where PK='001' and Col2='a' and Col3= 10).

At Step 9, the first data buffer 602 is updated with the new data row and its status is set to Clean. The contents of the first data buffer 602 are then copied to the first backup buffer 604.

Although the one or more above-described implementations have been described in language specific to structural features and/or methodological steps, it is to be understood that other implementations may be practiced without the specific features or steps described. Rather, the specific features and steps are disclosed as preferred forms of one or more implementations.

## Claims

1. A computer-implemented method of updating of a database (128) using an end terminal comprising a processing unit (114) and a main memory, wherein the database is column based, wherein the database comprises data rows, wherein the end terminal is configured to perform the updating of the database in an electrical power saving mode and in a standard electrical power consumption mode, wherein an electrical power consumption of the end terminal in the electrical power saving mode is lower than an electrical power consumption of the end terminal in the standard electrical power consumption mode, wherein a column-wise bulk updating of the database is performed in the electrical power saving mode and a discrete updating of the database is performed in the normal electrical power consumption mode, the computer-implemented method comprising:
switching the end terminal into the electrical power saving mode;
causing the processing unit to perform the column-wise bulk updating of the database, wherein the causing of the processing unit to perform the column-wise bulk updating of the database comprises:
generating a data cache in the main memory, wherein a data cache is row based;
in response to receiving an insert operation (530) of inserting of a data row to be added to the database inserting the data row to be added to the database into the data cache (532), wherein the data row to be added to the database is inserted into the database when an update of the database is determined to be cessary;
in response to receiving an update operation (540) of updating of a data row to be updated on the database updating the data row to be updated in the data cache (546) and in a cache miss case when the data cache does not comprise the data row to be updated, before the updating of the data row to be updated in the data cache executing an upload operation (544) that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database;
and
wherein the update of the database is determined to be necessary when an overall number of the data rows in the data cache exceeds a first threshold value;
switching the end terminal into the standard electrical power consumption mode; and
causing the processing unit to perform the discrete updating of the database, wherein the causing of the processing unit to perform the discrete updating of the database comprises:
executing the insert operation of inserting of the data row to be added to the database on the database; and
executing the update operation of the data row to be updated on the database.

2. The computer-implemented method of claim 1, wherein a remote terminal comprises the database, wherein the remote terminal is communicatively coupled to the end terminal via a cellular digital telecommunication network, wherein the upload operations, the column-wise bulk write operations, the insert operations, and the update operations are performed via the digital cellular telecommunication network, wherein the end terminal further comprises a wireless terminal being configured to communicafiively couple the end terminal to the remote terminal via the cellular digital telecommunication network, wherein the wireless terminal is in an idle mode by default and in an data transmission mode when any one of the following operations is executed via the digital cellular telecommunication network: the upload operation, the column-wise bulk write operation, the update operation, and the insert operation, wherein an electrical power consumption of the wireless terminal (116) in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal is in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

3. The computer-implemented method of claim 1 further comprising:
after the switching of the end terminal in the electrical power saving mode and before the switching of the end terminal in the normal electrical power consumption mode executing a bulk upload operation that uploads the data base into the main memory, wherein in the computer-implemented method step of the causing of the processing unit to perform the column-wise bulk updating of the database the processing unit is caused to perform the column-wise bulk updating of the database uploaded in the main memory.

4. The computer-implemented method of claim 3, wherein a remote terminal comprises the database uploaded into the main memory, wherein the remote terminal is communicatively coupled to the end terminal via a cellular digital telecommunication network, wherein the bulk upload operations, the insert operations, and the update operations are performed via the digital cellular telecommunication network, wherein the end terminal further comprises a wireless terminal (116) being configured to communicatively couple the end terminal to the remote terminal via the cellular digital telecommunication network, wherein the wireless terminal is in an idle mode by default and in an data transmission mode when any one of the hollowing operations is executed via the digital cellular telecommunication network: the bulk upload operation, the update operation, and the insert operation, wherein an electrical power consumption of the wireless terminal in the idle mode is lower than an electrical power consumption of the wireless terminal in the data transmission mode, wherein the electrical power consumption of the end terminal in the electrical power saving mode and in the standard electrical power consumption mode comprises the electrical power consumption of the wireless terminal in the idle mode when the wireless terminal in the idle mode and the electrical power consumption of the end terminal in the electrical power saving mode and in the standard electrical power consumption mode comprises the electrical power consumption of the wireless terminal in the data transmission mode when the wireless terminal is in the data transmission mode.

5. The computer-implemented method of any one of the preceding claims, wherein the processing unit comprises one or more microprocessors, wherein at least one microprocessor operates in a microprocessor power saving mode when the end terminal is switched into the electrical power saving mode, wherein the at least one microprocessor operates at the first clock frequency when the at least one microprocessor operates in the microprocessor power saving mode, wherein the at least one microprocessor operates at the second clock frequency when the at least one microprocessor operates not in the microprocessor power saving mode, wherein the second clock frequency is higher than the first clock frequency.

6. The computer-implemented method of one of the preceding claims1 or 3, wherein the causing of the processing unit to perform the discrete updating of the database further comprises executing a delete operation (520) of a data row to be deleted in the database on the database,
wherein the causing of the processing unit to perform the column-wise bulk updating of the database further comprises:
in response to receiving the delete operation of the data row to be deleted in the database on the database executing the delete operation of the data row to be deleted in the data cache (524) in a case when the data cache comprises the data row to be deleted and deleting the data row to be deleted in the database (522) in a case when the database comprises the data row to be deleted.

7. The computer-implemented method of any one of the preceding claims, wherein each data row in the data cache has a respective status value being equal to one of the following values "New" (452), "Old Clean" (454), and "Old Dirty" (456);
wherein the status value of each data row inserted into data cache is "New" before the execution of the column-wise bulk write operation;
wherein the status value of all data rows is "Old Clean" after the execution of the column-wise bulk write operation;
wherein the status value of each data row uploaded into the data cache is "Old Clean" before the updating of the each data row uploaded into the data cache; wherein the status value of each data row having status value "Old Clean" is changed to "Old Dirty" when said data row is updated;
wherein at least a portion of the data rows having status value "Old Clean" are deleted when their overall number exceeds a second threshold value.

8. The computer-implemented method of any one of the preceding claims wherein the column based database comprises an in-memory column based database.

9. The computer-implemented method of claim7, wherein each data row in the database and in the data cache comprise one or more fields for storing data values and a respective key, each data row in the data cache has a respective status value being equal to one of the following values "New" (452), "Old Clean" (454), and "Old Dirty" (456);
wherein the status value of each data row inserted into data cache is "New" before the execution of the column-wise bulk write operation;
wherein the status value of all data rows is "Old Clean" after the execution of the column-wise bulk write operation;
wherein the status value of each data row uploaded into the data cache is "Old Clean" before the updating of the each data row uploaded into the data cache; wherein the status value of each data row having the status value "Old Clean" is changed to "Old Dirty" after the updating of said data row in a case when the key of said data row remains unchanged when said data row is updated;
wherein the status value of each data row having the status value either "Old Clean" or "Old Dirty" is changed to "New" after the updating of said data row in a case when the key of said data row is updated when said data row is updated;
wherein the key of each data row in the data cache having the status value "New" and of each data row in the database uniquely identify the each data row in the data cache having the status "New" and the each data row in the database, wherein each field is used for storing less than two data values, each field has a respective field name, wherein each data row comprises only fields having different names, wherein the data values in the database are grouped in data records by the field names of the fields they are stored in, wherein the data values in the data cache are grouped in data rows by their respective keys, wherein the insert operation is an insert by key operation, the update operation is an update by key operation and the delete operation is a delete by key operation;
wherein at least a portion of the data rows having status value "Old Clean" are deleted when their overall number exceeds a third threshold value.

10. The computer-implemented method of claim 7, wherein each data row in the database and in the data cache comprise one or more fields for storing data values and a respective key, each data row in the database is uniquely identified by its respective key, wherein each field is used for storing less than two data values and each field has a respective field name, wherein each data row comprises only fields having different names, wherein the data values in the database are grouped in data records by the field names of the fields they are stored in, wherein the data values in the data cache are grouped in data rows by their respective keys, wherein the insert operation is an insert by key operation, the update operation is an update by key operation and the delete operation is a delete by key operation.

11. The computer-implemented method of claim10, wherein the causing of the processing unit to perform the column-wise bulk updating of the database is performed by executing a Structured Query Language (SQL) transactional processing, wherein one or more transactions of the transactional processing comprise at least one of the following first operations: the insert operation, the update operation, the delete operation, wherein the update of the database is further determined to be necessary in the following cases: committing of the single transaction comprising the at least one of the first operations is performed, before executing a batch update operation comprising a plurality of the update operations, before executing a batch delete operation comprising a plurality of the delete operations, before executing a SQL general query on the database, or before executing a SQL stored procedure on the database.

12. The computer-implemented method of claim 10, wherein the causing of the processing unit to perform the column-wise bulk updating of the database is performed by executing a Structured Query Language (SQL) transactional processing, wherein one or more transactions of the transactional processing comprise at least one of the following first operations: the insert operation, the update operation, the delete operation, wherein the update of the database is further determined to be necessary in the following cases: before executing a batch update operation comprising a plurality of the update operations, wherein the data cache comprises at least one data row to be updated when the batch update is executed, wherein the at least one data row to be updated has the status value equal to "Old Dirty"; before executing a batch delete operation comprising a plurality of the update operations, wherein the data cache comprises at least one data row to be deleted when the batch update is executed, wherein the at least one data row to be deleted has the status value equal to "Old Dirty"; before executing a SQL general query on the database and at least one data row in the data cache having the status value equal to "Old Dirty"; or before executing a SQL stored procedure on the database and at least one data row in the data cache having the status value equal to "Old Dirty".

13. The computer-implemented method of claim 10, wherein after the receiving of the insert operation of the data row to be added to the database and before and the inserting the data row to be added to the database into the data cache executing the column-wise bulk write operation that writes all data rows in the data cache to the database in a case when the inserting the data row to be added to the database into the data cache before the executing of the column-wise bulk write operation that writes all data rows in the data cache to the database causes violation of the unique identification of the data rows by their respective keys in the database,
after the receiving of the update operation of the updating of the data row to be updated and before the updating of the data row to be updated in the data cache executing the column-wise bulk write operation that writes all data rows in the data cache to the database in a case when the updating of the data row to be updated in the data cache before the executing of the column-wise bulk write operation that writes all data rows in the data cache to the database causes violation of the unique identification of the data rows by their respective keys in the database.

14. The computer-implemented method of claim 10, wherein the causing of the processing unit to perform the column-wise bulk updating of the database further comprises:
receiving a query by key operation (510) from an application operating on the end terminal;
in a case when a corresponding data row being uniquely identified by a key specified in the by key query is not found in the data cache (512), executing the upload operation (514) that uploads the data row being uniquely identified by a key specified in the by key query from the database; and
in a case when the corresponding record is found in the transactional cache, returning the corresponding record to the application (518).

15. A computer-implemented method of updating of a database (128) using an end terminal, wherein a database server comprises a processing unit, a main memory and the database, wherein the database is column based, wherein the database comprises data rows, wherein the database server is configured to perform the updating of the database in an electrical power saving mode and in a standard electrical power consumption mode, wherein an electrical power consumption of the end database server in the electrical power saving mode is lower than an electrical power consumption of the database server in the standard electrical power consumption mode, wherein a column-wise bulk updating of the database is performed in the electrical power saving mode and a discrete updating of the database is performed in the normal electrical power consumption mode, the computer-implemented method comprising:
switching the database server into the electrical power saving mode;
causing the processing unit to perform the column-wise bulk updating of the database, wherein the causing of the processing unit to perform the column-wise bulk updating of the database comprises:
generating a data cache in the main memory, wherein a data cache is row based;
in response to receiving form the end terminal an insert operation (530) of inserting of a data row to be added to the database inserting the data row to be added to the database into the data cache (532), wherein the data row to be added to the database is inserted into the database when an update of the database is determined to be necessary;
in response to receiving from the end terminal an update operation (540) of updating of a data row to be updated on the database updating the data row to be updated in the data cache (546) and in a cache miss case when the data cache does not comprise the data row to be updated, before the updating of the data row to be updated in the data cache executing an upload operation (544) that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database and
wherein the update of the database is determined to be necessary when an overall number of the data rows in the data cache exceeds a first threshold value;
switching the database server into the standard electrical power consumption mode; and
causing the processing unit to perform the discrete updating of the database, wherein the causing of the processing unit to perform the discrete updating of the database comprises:
in response to receiving form the end terminal an insert operation of inserting of a data row to be added to the database on the database executing the insert operation of inserting of the data row to be added to the database on the database; and
in response to receiving from the end terminal an update operation of updating of a data row to be updated on the database executing the update operation of the data row to be updated on the database.

16. A computer readable medium having stored thereon computer executable code for execution by a microprocessor (114) controlling an end terminal, wherein execution of the instructions of the executable code cause the microprocessor to execute a computer-implemented method of updating of a database (128) using the end terminal comprising the microprocessor and a main memory, wherein the database is column based, wherein the database comprises data rows, wherein the end terminal is configured to perform the updating of the database in an electrical power saving mode and in a standard electrical power consumption mode, wherein an electrical power consumption of the end terminal in the electrical power saving mode is lower than an electrical power consumption of the end terminal in the standard electrical power consumption mode, wherein a column-wise bulk updating of the database is performed in the electrical power saving mode and a discrete updating of the database is performed in the normal electrical power consumption mode, the computer-implemented method comprising:
switching the end terminal into the electrical power saving mode;
causing the microprocessor to perform the column-wise bulk updating of the database, wherein the causing of the microprocessor to perform the column-wise bulk updating of the database comprises:
generating a data cache in the main memory, wherein a data cache is row based;
in response to receiving an insert operation (530) of inserting of a data row to be added to the database inserting the data row to be added to the database into the data cache (532), wherein the data row to be added to the database is inserted into the database when an update of the database is determined to be necessary;
in response to receiving an update operation (540) of updating of a data row to be updated on the database updating the data row to be updated in the data cache and in a cache miss case when the data cache does not comprise the data row to be updated, before the updating of the data row to be updated in the data cache executing an upload operation that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database; and
wherein the update of the database is determined to be necessary when an overall number of the data rows in the data cache exceeds a first threshold value;
switching the end terminal into the standard electrical power consumption mode; and
causing the microprocessor to perform the discrete updating of the database,
wherein the causing of the microprocessor to perform the discrete updating of the database comprises:
executing the insert operation of inserting of the data row to be added to the database on the database; and
executing the update operation of the data row to be updated on the database.

17. A computer readable medium having stored thereon computer executable code for execution by one or more microprocessors controlling a database server (126), wherein execution of the instructions of the executable code cause the one or more microprocessors to execute a computer-implemented method of updating of a database (128), wherein the database server comprises the one or more microprocessors and a main memory, wherein the database is column based, wherein the database comprises data rows, wherein the database server is configured to perform the updating of the database in an electrical power saving mode and in a standard electrical power consumption mode, wherein an electrical power consumption of the database server in the electrical power saving mode is lower than an electrical power consumption of the database server in the standard electrical power consumption mode, wherein a column-wise bulk updating of the database is performed in the electrical power saving mode and a discrete updating of the database is performed in the normal electrical power consumption mode, the computer-implemented method comprising:
switching the database server into the electrical power saving mode;
causing the one or more microprocessors to perform the column-wise bulk updating of the database, wherein the causing of the one or more microprocessors to perform the column-wise bulk updating of the database comprises:
generating a data cache in the main memory, wherein a data cache is row based;
in response to receiving an insert operation (503) of inserting of a data row to be added to the database inserting the data row to be added to the database into the data cache (532), wherein the data row to be added to the database is inserted into the database when an update of the database is determined to be necessary;
in response to receiving an update operation (540) of updating of a data row to be updated on the database updating the data row to be updated in the data cache (546) and in a cache miss case when the data cache does not comprise the data row to be updated, before the updating of the data row to be updated in the data cache executing an upload operation (544) that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database;
and
wherein the update of the database is determined to be necessary when an overall number of the data rows in the data cache exceeds a first threshold value;
switching the database server into the standard electrical power consumption mode; and
causing the one or more microprocessors to perform the discrete updating of the database, wherein the causing of the one or more microprocessors to perform the discrete updating of the database comprises:
executing the insert operation of inserting of the data row to be added to the database on the database; and
executing the update operation of the data row to be updated on the database.

18. An end terminal configured to perform the updating of a database (128) in an electrical power saving mode and in a standard electrical power consumption mode, wherein an electrical power consumption of the end terminal in the electrical power saving mode is lower than an electrical power consumption of the end terminal in the standard electrical power consumption mode, wherein the end terminal comprises a processing unit (114) and a main memory, wherein the database is column based, wherein a column-wise bulk updating of the database is performed in the electrical power saving mode and a discrete updating of the database is performed in the normal electrical power consumption mode, the processing unit is configured to cause the end terminal to perform the following:
switching the end terminal into the electrical power saving mode;
causing the end terminal to perform the column-wise bulk updating of the database, wherein the causing of the end terminal to perform the column-wise bulk updating of the database comprises:
generating a data cache in the main memory, wherein a data cache is row based;
in response to receiving an insert operation (530) of inserting of a data row to be added to the database inserting the data row to be added to the database into the data cache (532), wherein the data row to be added to the database is inserted into the database when an update of the database is determined to be necessary;
in response to receiving an update operation (540) of updating of a data row to be updated on the database updating the data row to be updated in the data cache (546) and in a cache miss case when the data cache does not comprise the data row to be updated, before the updating of the data row to be updated in the data cache executing an upload operation (544) that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database;
and
wherein the update of the database is determined to be necessary when an overall number of the data rows in the data cache exceeds a first threshold value;
switching the end terminal into the standard electrical power consumption mode; and
causing the end terminal to perform the discrete updating of the database, wherein the causing of the processing unit to perform the discrete updating of the database comprises:
executing the insert operation of inserting of the data row to be added to the database on the database; and
executing the update operation of the data row to be updated on the database.

19. A database server configured to perform updating of a database (128) in an electrical power saving mode and in a standard electrical power consumption mode, wherein an electrical power consumption of the database server in the electrical power saving mode is lower than an electrical power consumption of the database server in the standard electrical power consumption mode, wherein the database server comprises a processing unit and a main memory, wherein the database is column based, wherein a column-wise bulk updating of the database is performed in the electrical power saving mode and a discrete updating of the database is performed in the normal electrical power consumption mode, the processing unit is configured to perform the following:
switching the database server into the electrical power saving mode;
causing the database server to perform the column-wise bulk updating of the database, wherein the causing of the database server to perform the column-wise bulk updating of the database comprises:
generating a data cache in the main memory, wherein a data cache is row based;
in response to receiving an insert operation (530) of inserting of a data row to be added to the database inserting the data row to be added to the database into the data cache (532), wherein the data row to be added to the database is inserted into the database when an update of the database is determined to be necessary;
in response to receiving an update operation (540) of updating of a data row to be updated on the database updating the data row to be updated in the data cache (546) and in a cache miss case when the data cache does not comprise the data row to be updated, before the updating of the data row to be updated in the data cache executing an upload operation (544) that uploads the data row to be updated into the data cache from the database, wherein the data row to be updated is updated in the database when the update of the database is determined to be necessary; and
in the case when the update of the database is determined to be necessary (552) executing a column-wise bulk write operation (554) that writes all data rows in the data cache to the database;
and
wherein the update of the database is determined to be necessary when an overall number of the data rows in the data cache exceeds a first threshold value;
switching the database server into the standard electrical power consumption mode; and
causing the database server to perform the discrete updating of the database, wherein the causing of the database server to perform the discrete updating of the database comprises:
executing the insert operation of inserting of the data row to be added to the database on the database; and
executing the update operation of the data row to be updated on the database.

## Patentansprüche

1. Computerimplementiertes Verfahren zur Aktualisierung einer Datenbank (128) unter Verwendung eines Endgeräts, das eine Verarbeitungseinheit (114) und einen Hauptspeicher umfasst, wobei die Datenbank auf Spalten basiert, wobei die Datenbank Datenzeilen umfasst, wobei das Endgerät dafür ausgelegt ist, die Aktualisierung der Datenbank in einem Stromsparmodus und einem Standard-Stromverbrauchsmodus durchzuführen, wobei ein Stromverbrauch des Endgeräts im Stromsparmodus niedriger ist als ein Stromverbrauch des Endgeräts im Standard-Stromverbrauchsmodus, wobei im Stromsparmodus eine Massenaktualisierung der Datenbank nach Spalten durchgeführt wird und im normalen Stromverbrauchsmodus eine Einzelaktualisierung der Datenbank durchgeführt wird, wobei das computerimplementierte Verfahren umfasst:
Schalten des Endgeräts in den Stromsparmodus;
Bewirken, dass die Verarbeitungseinheit die Massenaktualisierung der Datenbank nach Spalten durchführt, wobei das Bewirken, dass die Verarbeitungseinheit die Massenaktualisierung der Datenbank nach Spalten durchführt, umfasst:
Erzeugen eines Datenpuffers im Hauptspeicher, wobei ein Datenpuffer auf Zeilen basiert;
Einfügen einer Datenzeile, die der Datenbank hinzugefügt werden soll, in den Datenpuffer (532) als Antwort auf den Empfang einer Einfügungsoperation (530) zum Einfügen der Datenzeile, die der Datenbank hinzugefügt werden soll, wobei die Datenzeile, die der Datenbank hinzugefügt werden soll, in die Datenbank eingefügt wird, wenn bestimmt wird, dass eine Aktualisierung der Datenbank notwendig ist;
Aktualisieren einer Datenzeile, die aktualisiert werden soll, im Datenpuffer (546) als Antwort auf den Empfang einer Aktualisierungsoperation (540) zum Aktualisieren der Datenzeile, die in der Datenbank aktualisiert werden soll, und, falls ein Puffer nicht zur Verfügung steht, weil der Datenpuffer die Datenzeile, die aktualisiert werden soll, nicht enthält, Ausführen einer Hochladeoperation (544) zum Hochladen der Datenzeile, die aktualisiert werden soll, aus der Datenbank in den Datenpuffer, bevor die Datenzeile, die aktualisiert werden soll, im Datenpuffer aktualisiert wird, wobei die Datenzeile, die aktualisiert werden soll, in der Datenbank aktualisiert wird, wenn bestimmt wird, dass die Aktualisierung der Datenbank notwendig ist; und,
Ausführen einer Massenschreiboperation (554) nach Spalten, mit der alle Datenzeilen im Datenpuffer in die Datenbank geschrieben werden, falls bestimmt wird, dass die Aktualisierung der Datenbank notwendig ist (552); und
wobei bestimmt wird, dass die Aktualisierung der Datenbank notwendig ist, wenn eine Gesamtzahl der Datenzeilen im Datenpuffer einen ersten Schwellenwert überschreitet;
Schalten des Endgeräts in den Standard-Stromverbrauchsmodus; und
Bewirken, dass die Verarbeitungseinheit die Einzelaktualisierung der Datenbank durchführt, wobei das Bewirken, dass die Verarbeitungseinheit die Einzelaktualisierung der Datenbank durchführt, umfasst:
Ausführen der Einfügungsoperation zum Einfügen der Datenzeile, die der Datenbank hinzugefügt werden soll, zur Datenbank; und
Ausführen der Aktualisierungsoperation der Datenzeile, die aktualisiert werden soll, in der Datenbank.

2. Computerimplementiertes Verfahren nach Anspruch 1, wobei ein entlegenes Endgerät die Datenbank umfasst, wobei das entlegene Endgerät über ein zelluläres digitales Kommunikationsnetz kommunikationsfähig mit dem Endgerät verbunden ist, wobei die Hochladeoperationen, die Einfügungsoperationen und die Aktualisierungsoperationen über das digitale zelluläre Kommunikationsnetz durchgeführt werden, wobei das Endgerät ferner ein drahtloses Endgerät umfasst, das dafür ausgelegt ist, das Endgerät über das digitale zelluläre Kommunikationsnetz kommunikationsfähig mit dem entlegenen Endgerät zu verbinden, wobei das drahtlose Endgerät per Voreinstellung in einem Ruhemodus ist und in einem Datenübertragungsmodus ist, wenn eine der folgenden Operationen über das digitale zelluläre Kommunikationsnetz ausgeführt wird: die Hochladeoperation, die Massenaktualisierungsoperation nach Spalten, die Aktualisierungsoperation und die Einfügungsoperation, wobei ein Stromverbrauch des drahtlosen Endgeräts (116) im Ruhemodus niedriger ist als ein Stromverbrauch des drahtlosen Endgeräts im Datenübertragungsmodus, wobei der Stromverbrauch des Endgeräts im Stromsparmodus und im Standard-Stromverbrauchsmodus den Stromverbrauch des drahtlosen Endgeräts im Ruhemodus umfasst, wenn das drahtlose Endgerät im Ruhemodus ist, und der Stromverbrauch des Endgeräts im Stromsparmodus und im Standard-Stromverbrauchsmodus den Stromverbrauch des drahtlosen Endgeräts im Datenübertragungsmodus umfasst, wenn das drahtlose Endgerät im Datenübertragungsmodus ist.

3. Computerimplementiertes Verfahren nach Anspruch 1, ferner umfassend:
Ausführen einer Massenhochladeoperation zum Hochladen der Datenbank in den Hauptspeicher, nach dem Schalten des Endgeräts in den Stromsparmodus und vor dem Schalten des Endgeräts in den normalen Stromverbrauchsmodus, wobei im computerimplementierten Verfahrensschritt, in dem bewirkt wird, dass die Verarbeitungseinheit die Massenaktualisierung der Datenbank nach Spalten durchführt, bewirkt wird, dass die Verarbeitungseinheit die Massenaktualisierung der in den Hauptspeicher hochgeladenen Datenbank nach Spalten durchführt.

4. Computerimplementiertes Verfahren nach Anspruch 3, wobei ein entlegenes Endgerät die Datenbank umfasst, die in den Hauptspeicher geladen wird, wobei das entlegene Endgerät über ein digitales zelluläres Kommunikationsnetz kommunikationsfähig mit dem Endgerät verbunden ist, wobei die Massenaktualisierungsoperationen, die Einfügungsoperationen und die Aktualisierungsoperationen über das digitale zelluläre Kommunikationsnetz durchgeführt werden, wobei das Endgerät ferner ein drahtloses Endgerät (116) umfasst, das dafür ausgelegt ist, das Endgerät über das digitale zelluläre Kommunikationsnetz kommunikationsfähig mit dem entlegenen Endgerät zu verbinden, wobei das drahtlose Endgerät per Voreinstellung in einem Ruhemodus ist und in einem Datenübertragungsmodus ist, wenn eine der folgenden Operationen über das digitale zelluläre Kommunikationsnetz ausgeführt wird: die Massenhochladeoperation, die Aktualisierungsoperation und die Einfügungsoperation, wobei ein Stromverbrauch des drahtlosen Endgeräts im Ruhemodus niedriger ist als ein Stromverbrauch des drahtlosen Endgeräts im Datenübertragungsmodus, wobei der Stromverbrauch des Endgeräts im Stromsparmodus und im Stan-dard-Stromverbrauchsmodus den Stromverbrauch des drahtlosen Endgeräts im Ruhemodus umfasst, wenn das drahtlose Endgerät im Ruhemodus ist, und der Stromverbrauch des Endgeräts im Stromsparmodus und im Standard-Stromverbrauchsmodus den Stromverbrauch des drahtlosen Endgeräts im Datenübertragungsmodus umfasst, wenn das drahtlose Endgerät im Datenübertragungsmodus ist.

5. Computerimplementiertes Verfahren nach einem der vorangehenden Ansprüche, wobei die Verarbeitungseinheit einen oder mehrere Mikroprozessoren umfasst, wobei mindestens ein Mikroprozessor in einem Mikroprozessorstromparmodus arbeitet, wenn das Endgerät in den Stromsparmodus geschaltet ist, wobei der mindestens eine Mikroprozessor bei der ersten Taktfrequenz arbeitet, wenn der mindestens eine Mikroprozessor im Mikroprozessorstromsparmodus arbeitet, wobei der mindestens eine Mikroprozessor bei der zweiteN Taktfrequenz arbeitet, wenn der mindestens eine Mikroprozessor nicht im Mikroprozessorstromsparmodus arbeitet, wobei die zweite Taktfrequenz höher ist als die erste Taktfrequenz.

6. Computerimplementiertes Verfahren nach einem der vorangehenden Ansprüche 1 oder 3, wobei das Bewirken, dass die Verarbeitungseinheit die Einzelaktualisierung der Datenbank durchführt, ferner das Ausführen einer Löschoperation (520) einer Datenzeile, die in der Datenbank gelöscht werden soll, in der Datenbank umfasst,
wobei das Bewirken, dass die Verarbeitungseinheit die Massenaktualisierung der Datenbank nach Spalten durchführt, ferner umfasst:
Ausführen der Löschoperation der Datenzeile, die gelöscht werden soll, im Datenpuffer (524), als Antwort auf den Empfang der Löschoperation der Datenzeile, die in der Datenbank gelöscht werden soll, in der Datenbank, falls der Datenpuffer die Datenzeile enthält, die gelöscht werden soll, und Löschen der Datenzeile, die gelöscht werden soll, in der Datenbank (522), falls die Datenbank die Datenzeile enthält, die gelöscht werden soll.

7. Computerimplementiertes Verfahren nach einem der vorangehenden Ansprüche, wobei jede Datenzeile im Datenpuffer einen entsprechenden Zustandswert aufweist, der einem der folgenden Werte gleich ist: "New" (452), "Old Clean" (454) und "Old Dirty" (456);
wobei der Zustandswert jeder Datenzeile, die in den Datenpuffer eingefügt wird, vor der Ausführung der Mas-senschreiboperation nach Spalten "New" ist;
wobei der Zustandswert jeder Datenzeile nach der Ausführung der Massenschreiboperation nach Spalten "Old Clean" ist;
wobei der Zustandswert jeder Datenzeile, die in den Datenpuffer hochgeladen wird, vor der Aktualisierung jeder Datenzeile "Old Clean" ist;
wobei der Zustandswert jeder Datenzeile mit dem Zustandswert "Old Clean" in "Old Dirty" geändert wird, wenn die Datenzeile aktualisiert wird;
wobei mindestens ein Teil der Datenzeilen mit dem Zustandswert "Old Clean" gelöscht wird, wenn ihre Gesamtzahl einen zweiten Schwellenwert überschreitet.

8. Computerimplementiertes Verfahren nach einem der vorangehenden Ansprüche, wobei die Datenbank, die auf Spalten basiert, eine auf Spalten basierende Datenbank im Memory umfasst.

9. Computerimplementiertes Verfahren nach Anspruch 7, wobei jede Datenzeile in der Datenbank und im Datenpuffer ein oder mehrere Felder zum Speichern von Datenwerten und einen entsprechenden Schlüssel umfasst, wobei jede Datenzeile im Datenpuffer einen entsprechenden Zustandswert aufweist, der einem der folgenden Werte gleich ist: "New" (452), "Old Clean" (454) und "Old Dirty" (456);
wobei der Zustandswert jeder Datenzeile, die in den Datenpuffer eingefügt wird, vor der Ausführung der Massenschreiboperation nach Spalten "New" ist;
wobei der Zustandswert jeder Datenzeile nach der Ausführung der Massenschreiboperation nach Spalten "Old Clean" ist;
wobei der Zustandswert jeder Datenzeile, die in den Datenpuffer hochgeladen wird, vor der Aktualisierung jeder Datenzeile, die in den Datenpuffer hochgeladen wird, "Old Clean" ist;
wobei der Zustandswert jeder Datenzeile mit dem Zustandswert "Old Clean" nach der Aktualisierung der Datenzeile in "Old Dirty" geändert wird, falls der Schlüssel dieser Datenzeile unverändert bleibt, wenn die Datenzeile aktualisiert wird;
wobei der Zustandswert jeder Datenzeile mit dem Zustandswert "Old Clean" oder "Old Dirty" nach der Aktualisierung der Datenzeile in "Neu" geändert wird, falls der Schlüssel der Datenzeile aktualisiert wird, wenn die Datenzeile aktualisiert wird;
wobei der Schlüssel jeder Datenzeile im Datenpuffer, die den Zustandswert "Neu" aufweist, und von jeder Datenzeile in der Datenbank die einzelnen Datenzeilen im Datenpuffer, die den "Neu" aufweisen, und die einzelnen Datenzeilen in der Datenbank eindeutig identifiziert, wobei jedes Feld verwendet wird, um weniger als zwei Datenwerte zu speichern, wobei jedes Feld einen entsprechenden Feldnamen aufweist, wobei jede Datenzeile nur Felder mit unterschiedlichen Namen umfasst, wobei die Datenwerte in der Datenbank in Datensätze nach den Feldnamen der Felder, in denen sie gespeichert sind, gruppiert werden, wobei die Datenwerte im Datenpuffer nach ihren entsprechenden Schlüsseln in Datenzeilen gruppiert werden, wobei die Einfügungsoperation eine Einfügungsoperation nach Schlüsseln ist, die Aktualisierungsoperation eine Aktualisierungsoperation nach Schlüsseln ist und die Löschoperation eine Löschoperation nach Schlüsseln ist;
wobei zumindest ein Teil der Datenzeilen mit dem Zustandswert "Old Clean" gelöscht wird, wenn ihre Gesamtzahl einen dritten Schwellenwert überschreitet.

10. Computerimplementiertes Verfahren nach Anspruch 7, wobei jede Datenzeile in der Datenbank und im Datenpuffer ein oder mehrere Felder zum Speichern von Datenwerten und einem entsprechenden Schlüssel umfasst, wobei jede Datenzeile in der Datenbank durch ihren entsprechenden Schlüssel eindeutig identifiziert wird, wobei jedes Feld zum Speichern von weniger als zwei Datenwerten verwendet wird und jedes Feld einen entsprechenden Feldnamen aufweist, wobei jede Datenzeile nur Felder mit unterschiedlichen Namen aufweist, wobei die Datenwerte in der Datenbank nach den Feldnamen der Felder, in denen sie gespeichert sind, zu Datensätzen gruppiert werden, wobei die Datenwerte im Datenpuffer nach ihren entsprechenden Schlüsseln zu Datenzeilen gruppiert werden, wobei die Einfügungsoperation eine Einfügungsoperation nach Schlüsseln ist, die Aktualisierungsoperation eine Aktualisierungsoperation nach Schlüsseln ist und die Löschoperation eine Löschoperation nach Schlüsseln ist.

11. Computerimplementiertes Verfahren nach Anspruch 10, wobei das Bewirken, dass die Verarbeitungseinheit die Massenaktualisierung der Datenbank nach Spalten durchführt, durch Ausführen einer transaktionalen Verarbeitung einer Structured Query Language (SQL) durchgeführt wird,
wobei eine oder mehrere Transaktionen der transaktionalen Verarbeitung mindestens eine der folgenden ersten Operationen umfassen: die Einfügungsoperation, die Aktualisierungsoperation, die Löschoperation, wobei ferner in den folgenden Fällen bestimmt wird, dass die Aktualisierung der Datenbank notwendig ist: die Abarbeitung der einzigen Transaktion, die die mindestens eine der ersten Operationen umfasst, wird durchgeführt, bevor eine Massenaktualisierungsoperation, die eine Mehrzahl der Aktualisierungsoperationen umfasst, ausgeführt wird, bevor eine Massenlöschoperaton, die eine Mehrzahl der Löschoperationen umfasst, ausgeführt wird, bevor eine SQL-Allgemeinabfrage an der Datenbank ausgeführt wird oder bevor ein in SQL gespeicherter Ablauf an der Datenbank ausgeführt wird.

12. Computerimplementiertes Verfahren nach Anspruch 10, wobei das Bewirken, dass die Verarbeitungseinheit die Massenaktualisierung der Datenbank nach Spalten durchführt, durch Ausführen einer translationalen Structured Query Language (SQL)-Verarbeitung durchgeführt wird, wobei eine oder mehrere Transaktionen der transaktionalen Verarbeitung mindestens eine der folgenden ersten Operationen umfassen: die Einfügungsoperation, die Aktualisierungsoperation, die Löschoperation, wobei ferner in den folgenden Fällen bestimmt wird, dass die Aktualisierung der Datenbank notwendig ist: vor Ausführung einer Massenaktualisierungsoperation, die eine Mehrzahl der Aktualisierungsoperationen umfasst, wobei der Datenpuffer mindestens eine Datenzeile umfasst, die aktualisiert werden soll, wenn die Massenaktualisierung ausgeführt wird, wobei die mindestens eine Datenzeile, die aktualisiert werden soll, den Zustandswert "Old Dirty" aufweist; vor Ausführung einer Massenlöschoperation, die eine Mehrzahl von Löschoperationen umfasst, wobei der Datenpuffer mindestens eine Datenzeile, die gelöscht werden soll, umfasst, wenn die Massenaktualisierung ausgeführt wird, wobei die mindestens eine Datenzeile, die gelöst werden soll, den Zustandswert "Old Dirty" aufweist; bevor eine allgemeine SQL-Abfrage an der Datenbank ausgeführt wird und wenn mindestens eine Datenzeile im Datenpuffer den Zustandswert "Old Dirty" aufweist; oder vor Ausführung einer gespeicherten SQL-Prozedur an der Datenbank und wenn mindestens eine Datenzeile im Datenpuffer den Zustandswert "Old Dirty" aufweist.

13. Computerimplementiertes Verfahren nach Anspruch 10, wobei nach dem Empfangen der Einfügungsoperation der Datenzeile, die zur Datenbank hinzugefügt werden soll, und vor der Einfügung der Datenzeile, die zur Datenbank hinzugefügt werden soll, zum Datenpuffer die Massenschreiboperation nach Spalten ausgeführt wird, mit der alle Datenzeilen im Datenpuffer in die Datenbank geschrieben werden, falls das Einfügen der Datenzeile, die zur Datenbank hinzugefügt werden soll, in den Datenpuffer vor der Ausführung der Massenschreiboperation nach Spalten, die alle Datenzeilen im Datenpuffer in die Datenbank schreibt, eine Verletzung der eindeutigen Identifizierung der Datenzeilen durch ihre entsprechenden Schlüssel in der Datenbank bewirkt,
Ausführen der Massenschreiboperation nach Spalten, die alle Datenzeilen im Datenpuffer in die Datenbank schreibt, nach dem Empfangen der Aktualisierungsoperation zum Aktualisieren der Datenzeile, die aktualisiert werden soll, und vor der Aktualisierung der Datenzeile, die aktualisiert werden soll, im Datenpuffer, falls die Aktualisierung der Datenzeile, die aktualisiert werden soll, im Datenpuffer vor der Ausführung der Massenschreiboperation nach Spalten, die alle Datenzeilen im Datenpuffer in die Datenbank schreibt, eine Verletzung der eindeutigen Identifizierung der Datenzeilen durch ihre entsprechenden Schlüssel in der Datenbank bewirkt.

14. Computerimplementiertes Verfahren nach Anspruch 10, wobei zu bewirken, dass die Verarbeitungseinheit die Massenaktualisierung der Datenbank nach Spalten durchführt, ferner umfasst:
Empfangen einer Abfrage-nach-Schlüssel-Operation (510) von einer Anwendung, die am Endgerät operiert;
Ausführen der Hochladeoperation (514), die eine Datenzeile, die von einem Schlüssel, der von der Abfrage nach Schlüssel eindeutig identifiziert wird, in die Datenbank hoch lädt, falls die entsprechende Datenzeile, die von einem Schlüssel, der in der Abfrage nach Schlüssel nicht vorkommt, eindeutig identifiziert wird, im Datenpuffer (512) nicht vorkommt; und,
Zurückschicken des entsprechenden Datensatzes zur Anwendung (518), falls der entsprechende Datensatz im transaktionalen Puffer vorkommt.

15. Computerimplementiertes Verfahren zur Aktualisierung einer Datenbank (128) unter Verwendung eines Endgeräts, wobei ein Datenbankserver eine Verarbeitungseinheit, einen Hauptspeicher und die Datenbank umfasst, wobei die Datenbank auf Spalten basiert, wobei die Datenbank Datenzeilen umfasst, wobei der Datenbankserver dafür ausgelegt ist, die Aktualisierung der Datenbank in einem Stromsparmodus und einem Standard-Stromverbrauchsmodus durchzuführen, wobei ein Stromverbrauch des Enddatenbankservers im Stromsparmodus niedriger ist als ein Stromverbrauch des Datenbankservers im Standard-Stromverbrauchsmodus, wobei im Stromsparmodus eine Massenaktualisierung der Datenbank nach Spalten durchgeführt wird und im normalen Stromverbrauchsmodus eine Einzelaktualisierung der Datenbank durchgeführt wird, wobei das computerimplementierte Verfahren umfasst:
Schalten des Datenbankservers in den Stromsparmodus;
Bewirken, dass die Verarbeitungseinheit die Massenaktualisierung der Datenbank nach Spalten durchführt, wobei zu bewirken, dass die Verarbeitungseinheit die Massenaktualisierung der Datenbank nach Spalten durchführt, umfasst:
Erzeugen eines Datenpuffers im Hauptspeicher, wobei ein Datenpuffer auf Zeilen basiert;
Einfügen einer Datenzeile, die der Datenbank hinzugefügt werden soll, in den Datenpuffer (532) als Antwort auf den Empfang einer Einfügungsoperation (530) zum Einfügen der Datenzeile, die der Datenbank hinzugefügt werden soll, vom Endgerät, wobei die Datenzeile, die der Datenbank hinzugefügt werden soll, in die Datenbank eingefügt wird, wenn bestimmt wird, dass eine Aktualisierung der Datenbank notwendig ist;
Aktualisieren einer Datenzeile, die aktualisiert werden soll, im Datenpuffer (546) als Antwort auf den Empfang einer Aktualisierungsoperation (540) zum Aktualisieren der Datenzeile, die in der Datenbank aktualisiert werden soll, und Ausführen einer Hochladeoperation (544), mit der die Datenzeile, die aktualisiert werden soll, aus der Datenbank in den Datenpuffer in den Datenpuffer hochgeladen wird, falls ein Puffer nicht zur Verfügung steht, weil der Datenpuffer die Datenzeile, die aktualisiert werden soll, nicht enthält, bevor die Datenzeile, die aktualisiert werden soll, im Datenpuffer aktualisiert wird, wobei die Datenzeile, die aktualisiert werden soll, in der Datenbank aktualisiert wird, wenn bestimmt wird, dass die Aktualisierung der Datenbank notwendig ist; und,
Ausführen einer Massenschreiboperation nach Spalten (554), die alle Datenzeilen im Datenpuffer in die Datenbank schreibt, falls bestimmt wird, dass die Aktualisierung der Datenbank notwendig ist (552),
wobei bestimmt wird, dass die Aktualisierung der Datenbank notwendig ist, wenn eine Gesamtzahl der Datenzeilen im Datenpuffer einen ersten Schwellenwert überschreitet;
Schalten des Datenbankservers in den Standard-Stromverbrauchsmodus; und
Bewirken, dass die Verarbeitungseinheit die Einzelaktualisierung der Datenbank durchführt, wobei das Bewirken, dass die Verarbeitungseinheit die Einzelaktualisierung der Datenbank durchführt, umfasst:
Ausführen der Einfügungsoperation, um eine Datenzeile, die der Datenbank hinzugefügt werden soll, in die Datenbank einzufügen, als Antwort auf den Empfang einer Einfügungsoperation vom Endgerät zum Einfügen der Datenzeile, die zur Datenbank hinzugefügt werden soll, in die Datenbank; und Ausführen der Aktualisierungsoperation der Datenzeile, die aktualisiert werden soll, in der Datenbank als Antwort auf den Empfang einer Aktualisierungsoperation zum Aktualisieren einer Datenzeile, die aktualisiert werden soll, in der Datenbank vom Endgerät.

16. Computerlesbares Medium, auf dem ein computerausführbarer Code zur Ausführung durch einen Mikroprozessor (114) gespeichert ist, der ein Endgerät steuert, wobei die Ausführung der Befehle des ausführbaren Codes bewirkt, dass der Mikroprozessor ein computerimplementiertes Verfahren zur Aktualisierung einer Datenbank (128) unter Verwendung des Endgeräts ausführt, das den Mikroprozessor und einen Hauptspeicher umfasst, wobei die Datenbank auf Spalten basiert, wobei die Datenbank Datenzeilen umfasst, wobei das Endgerät dafür ausgelegt ist, die Aktualisierung der Datenbank in einem Stromsparmodus und in einem Standard-Stromverbrauchsmodus durchzuführen, wobei ein Stromverbrauch des Endgerätsim Stromsparmodus niedriger ist als ein Stromverbrauch des Endgeräts im Standard-Stromverbrauchsmodus, wobei im Stromsparmodus eine Massenaktualisierung der Datenbank nach Spalten durchgeführt wird und im normalen Stromverbrauchsmodus eine Einzelaktualisierung der Datenbank durchgeführt wird, wobei das computerimplementierte Verfahren umfasst:
Schalten des Endgeräts in den Stromsparmodus; und
Bewirken, dass der Mikroprozessor die Massenaktualisierung der Datenbank nach Spalten durchführt, wobei das Bewirken, dass der Mikroprozessor die Massenaktualisierung der Datenbank spaltenweise durchführt, umfasst:
Erzeugen eines Datenpuffers im Hauptspeicher, wobei ein Datenpuffer auf Zeilen basiert;
Einfügen einer Datenzeile, die Datenbank hinzugefügt werden soll, in den Datenpuffer (532) als Antwort auf den Empfang einer Einfügungsoperation (530) zum Einfügen der Datenzeile, die der Datenbank hinzugefügt werden soll, wobei die Datenzeile, die der Datenbank hinzugefügt werden soll, in die Datenbank eingefügt wird, wenn bestimmt wird, dass eine Aktualisierung der Datenbank notwendig ist;
Aktualisieren einer Datenzeile, die aktualisiert werden soll, im Datenpuffer als Antwort auf den Empfang einer Aktualisierungsanweisung (540) zum Aktualisieren der Datenzeile, die in der Datenbank aktualisiert werden soll, und Ausführen einer Hochladeoperation (544), mit der die Datenzeile, die aktualisiert werden soll, aus der Datenbank in den Datenpuffer hochgeladen wird, falls ein Puffer nicht zur Verfügung steht, weil der Datenpuffer die Datenzeile, die aktualisiert werden soll, nicht enthält, vor der Aktualisierung der Datenzeile, die aktualisiert werden soll, im Datenpuffer, wobei die Datenzeile, die aktualisiert werden soll, in der Datenbank aktualisiert wird, wenn bestimmt wird, dass die Aktualisierung der Datenbank notwendig ist; und in dem Fall, wo bestimmt wird, dass die Aktualisierung der Datenbank notwendig ist (552): Ausführen einer Massenschreiboperation (554) nach Spalten, die alle Datenzeilen im Datenpuffer in die Datenbank schreibt; und
wobei bestimmt wird, dass die Aktualisierung der Datenbank notwendig ist, wenn eine Gesamtzahl der Datenzeilen im Datenpuffer einen ersten Schwellenwert überschreitet;
Schalten des Endgeräts in den Standard-Stromverbrauchsmodus; und
Bewirken, dass der Mikroprozessor die Einzelaktualisierung der Datenbank durchführt,
wobei das Bewirken, dass der Mikroprozessor die Einzelaktualisierung der Datenbank durchführt, umfasst:
Ausführen der Einfügungsoperation, bei der die Datenzeile, die der Datenbank hinzugefügt werden soll, der Datenbank hinzugefügt wird; und
Ausführen der Aktualisierungsoperation der Datenzeile, die aktualisiert werden soll, in der Datenbank.

17. Computerlesbares Medium, auf dem ein computerausführbarer Code zur Ausführung durch einen oder mehrere Mikroprozessoren, die einen Datenbankserver (126) steuern, gespeichert ist, wobei die Ausführung der Befehle des ausführbaren Codes bewirkt, dass der eine oder die mehreren Mikroprozessoren ein computerimplementiertes Verfahren zur Aktualisierung einer Datenbank (128) ausführen, wobei der Datenbankserver den einen oder die mehreren Mikroprozessoren und einen Hauptspeicher umfasst, wobei die Datenbank auf Spalten basisert, wobei die Datenbank Datenzeilen umfasst, wobei der Datenbankserver dafür ausgelegt ist, die Aktualisierung der Datenbank in einem Stromsparmodus und in einem Standard-Stromverbrauchsmodus durchzuführen, wobei ein Stromverbrauch des Datenbankservers im Stromsparmodus niedriger ist als ein Stromverbrauch des Datenbankservers im Standard-Stromverbrauchsmodus, wobei im Stromsparmodus eine Massenaktualisierung der Datenbank spaltenweise durchgeführt wird und im normalen Stromverbrauchsmodus eine Einzelaktualisierung der Datenbank durchgeführt wird, wobei das computerimplementierte Verfahren umfasst:
Schalten des Datenbankservers in den Stromsparmodus;
Bewirken, dass der eine oder die mehreren Mikroprozessoren die Massenaktualisierung der Datenbank nach Spalten durchführt, wobei das Bewirken, dass der eine oder die mehreren Mikroprozessoren die Massenaktualisierung der Datenbank nach Spalten durchführen, umfasst:
Erzeugen eines Datenpuffers im Hauptspeicher, wobei ein Datenpuffer auf Spalten basiert;
Einfügen einer Datenzeile, die der Datenbank hinzugefügt werden soll, in den Datenpuffer (532) als Antwort auf den Empfang einer Einfügungsoperation (530) zum Einfügen der Datenzeile, die der Datenbank hinzugefügt werden soll, wobei die Datenzeile, die der Datenbank hinzugefügt werden soll, in die Datenbank eingefügt wird, wenn bestimmt wird, dass eine Aktualisierung der Datenbank notwendig ist;
Aktualisieren einer Datenzeile, die aktualisiert werden soll, im Datenpuffer (546) als Antwort auf den Empfang einer Aktualisierungsoperation (540) zum Aktualisieren der Datenzeile, die in der Datenbank aktualisiert werden soll, und Ausführen einer Hochladeoperation (544), mit der die Datenzeile, die aktualisiert werden soll, aus der Datenbank in den Datenpuffer hochgeladen wird, falls ein Puffer nicht zur Verfügung steht, weil der Datenpuffer die Datenzeile, die aktualisiert werden soll, nicht enthält, bevor die Datenzeile, die aktualisiert werden soll, im Datenpuffer aktualisiert wird, wobei die Datenzeile, die aktualisiert werden soll, in der Datenbank aktualisiert wird, wenn bestimmt wird, dass die Aktualisierung der Datenbank notwendig ist; und,
Ausführen einer Massenschreiboperation (554) nach Spalten, die alle Datenzeilen im Datenpuffer in die Datenbank schreibt, falls bestimmt wird, dass die Aktualisierung der Datenbank notwendig ist (552); und
wobei bestimmt wird, dass die Aktualisierung der Datenbank notwendig ist, wenn eine Gesamtzahl der Datenzeilen im Datenpuffer einen ersten Schwellenwert überschreitet;
Schalten des Datenbankservers in den Standard-Stromverbrauchsmodus; und
Bewirken, dass der eine oder die mehreren Mikroprozessoren die Einzelaktualisierung der Datenbank durchführen, wobei das Bewirken, dass der eine oder die mehreren Mikroprozessoren die Einzelaktualisierung der Datenbank durchführen, umfasst:
Ausführen der Einfügungsoperation zum Einfügen der Datenzeile, die der Datenbank hinzugefügt werden soll, in die Datenbank; und
Ausführen der Aktualisierungsoperation der Datenzeile, die aktualisiert werden soll, in der Datenbank.

18. Endgerät, das dafür ausgelegt ist, die Aktualisierung einer Datenbank (128) in einem Stromsparmodus und in einem Standard-Stromverbrauchsmodus durchzuführen, wobei ein Stromverbrauch des Endgeräts im Stromsparmodus niedriger ist als ein Stromverbrauch des Endgeräts im Standard-Stromverbrauchsmodus, wobei das Endgerät eine Verarbeitungseinheit (114) und einen Hauptspeicher umfasst, wobei die Datenbank auf Spalten basiert, wobei im Stromsparmodus eine Massenaktualisierung der Datenbank nach Spalten durchgeführt wird und im normalen Stromverbrauchsmodus eine Einzelaktualisierung der Datenbank durchgeführt wird, wobei die Verarbeitungseinheit dafür ausgelegt ist, zu bewirken, dass das Endgerät Folgendes ausführt:
Schalten des Endgeräts in den Stromsparmodus;
Bewirken, dass das Endgerät die Massenaktualisierung der Datenbank nach Spalten durchführt,
wobei das Bewirken, dass das Endgerät die Aktualisierung der Datenbank nach Spalten durchführt, umfasst:
Erzeugen eines Datenpuffers im Hauptspeicher, wobei ein Datenpuffer auf Zeilen basiert;
Einfügen einer Datenzeile, die der Datenbank hinzugefügt werden soll, in den Datenpuffer (532) als Antwort auf den Empfang der Einfügungsoperation (530) zum Einfügen der Datenzeile, die der Datenbank hinzugefügt werden soll, wobei die Datenzeile, die der Datenbank hinzugefügt werden soll, in die Datenbank eingefügt wird, wenn bestimmt wird, dass eine Aktualisierung der Datenbank notwendig ist,
Aktualisieren einer Datenzeile, die aktualisiert werden soll, im Datenpuffer (546) als Antwort auf den Empfang einer Aktualisierungsanweisung (540) zum Aktualisieren der Datenzeile, die in der Datenbank aktualisiert werden soll, und Ausführen einer Hochladeoperation (544), mit der die Datenzeile, die aktualisiert werden soll, aus der Datenbank in den Datenpuffer hochgeladen wird, falls ein Puffer nicht zur Verfügung steht, weil der Datenpuffer die Datenzeile, die aktualisiert werden soll, nicht enthält, bevor die Datenzeile, die aktualisiert werden soll, im Datenpuffer aktualisiert wird, wobei die Datenzeile, die aktualisiert werden soll, in der Datenbank aktualisiert wird, wenn bestimmt wird, dass die Aktualisierung der Datenbank notwendig ist; und,
Ausführen einer Massenschreiboperation (554) nach Spalten, die alle Datenzeilen im Datenpuffer in die Datenbank schreibt, falls bestimmt wird, dass die Aktualisierung der Datenbank notwendig ist (552); und
wobei bestimmt wird, dass die Aktualisierung der Datenbank notwendig ist, wenn eine Gesamtzahl der Datenzeilen im Datenpuffer einen ersten Schwellenwert überschreitet;
Schalten des Endgeräts in den Standard-Stromverbrauchsmodus; und
Bewirken, dass das Endgerät die Einzelaktualisierung der Datenbank durchführt, wobei das Bewirken, dass das Endgerät die Einzelaktualisierung der Datenbank durchführt, umfasst:
Ausführen der Einfügungsoperation zum Einfügen der Datenzeile, die der Datenbank hinzugefügt werden soll, in die Datenbank; und
Ausführen der Aktualisierungsoperation der Datenzeile, die aktualisiert werden soll, in der Datenbank.

19. Datenbankserver, der dafür ausgelegt ist, eine Aktualisierung einer Datenbank (128) in einem Stromsparmodus und in einem Standard-Stromverbrauchsmodus durchzuführen, wobei ein Stromverbrauch des Datenbankservers im Stromsparmodus niedriger ist als ein Stromverbrauch des Datenbankservers im Standard-Stromverbrauchsmodus, wobei der Datenbankserver eine Verarbeitungseinheit und einen Hauptspeicher umfasst, wobei die Datenbank auf Spalten basiert, wobei im Stromsparmodus eine Massenaktualisierung der Datenbank nach Spalten durchgeführt wird und im normalen Stromverbrauchsmodus eine Einzelaktualisierung der Datenbank durchgeführt wird, wobei die Verarbeitungseinheit dafür ausgelegt ist, Folgendes durchzuführen:
Schalten des Datenbankservers in den Stromsparmodus;
Bewirken, dass der Datenbankserver die Massenaktualisierung der Datenbank nach Spalten durchführt, wobei zu bewirken, dass der Datenbankserver die Massenaktualisierung der Datenbank nach Spalten durchführt, umfasst:
Erzeugen eines Datenpuffers im Hauptspeicher, wobei ein Datenpuffer auf Zeilen basiert;
Einfügen einer Datenzeile, die der Datenbank hinzugefügt werden soll, in den Datenpuffer (532) als Antwort auf den Empfang der Einfügungsoperation (530) zum Einfügen der Datenzeile, die der Datenbank hinzugefügt werden soll, wobei die Datenzeile, die der Datenbank hinzugefügt werden soll, in die Datenbank eingefügt wird, wenn bestimmt wird, dass eine Aktualisierung der Datenbank notwendig ist,
Aktualisieren einer Datenzeile, die aktualisiert werden soll, im Datenpuffer (546) als Antwort auf den Empfang einer Aktualisierungsanweisung (540) zum Aktualisieren der Datenzeile, die in der Datenbank aktualisiert werden soll, und Ausführen einer Hochladeoperation (544), mit der die Datenzeile, die aktualisiert werden soll, aus der Datenbank in den Datenpuffer hochgeladen wird, falls ein Puffer nicht zur Verfügung steht, weil der Datenpuffer die Datenzeile, die aktualisiert werden soll, nicht enthält, bevor die Datenzeile, die aktualisiert werden soll, im Datenpuffer aktualisiert wird, wobei die Datenzeile, die aktualisiert werden soll, in der Datenbank aktualisiert wird, wenn bestimmt wird, dass die Aktualisierung der Datenbank notwendig ist; und,
Ausführen einer Massenschreiboperation (554) nach Spalten, die alle Datenzeilen im Datenpuffer in die Datenbank schreibt, falls bestimmt wird, dass die Aktualisierung der Datenbank notwendig ist (552); und:
wobei bestimmt wird, dass die Aktualisierung der Datenbank notwendig ist, wenn eine Gesamtzahl der Datenzeilen im Datenpuffer einen ersten Schwellenwert überschreitet;
Schalten des Datenbankservers in den Standard-Stromverbrauchsmodus; und
Bewirken, dass der Datenbankserver die Einzelaktualisierung der Datenbank durchführt,
wobei das Bewirken, dass der Datenbankserver die Einzelaktualisierung der Datenbank durchführt, umfasst:
Ausführen der Einfügungsoperation, bei der die Datenzeile, die der Datenbank hinzugefügt werden soll, der Datenbank hinzugefügt wird; und
Ausführen der Aktualisierungsoperation der Datenzeile, die aktualisiert werden soll, in der Datenbank.

## Revendications

1. Procédé mis en oeuvre par ordinateur pour la mise à jour d'une base de données (128) utilisant un terminal final comprenant une unité de traitement (114) et une mémoire principale, dans lequel la base de données est construite en colonnes, où la base de données comprend des rangées de données, où le terminal final est configuré pour réaliser la mise à jour de la base de données dans un mode d'économie de l'énergie électrique et dans un mode standard de consommation de l'énergie électrique, où la consommation de l'énergie électrique du terminal final dans le mode d'économie de l'énergie électrique est inférieure à la consommation de l'énergie électrique du terminal final dans le mode standard de consommation de l'énergie électrique, où une mise à jour de masse colonne par colonne de la base de données est réalisée dans le mode d'économie de l'énergie électrique et une mise à jour distincte de la base de données est réalisée dans le mode normal de consommation de l'énergie électrique, le procédé mis en oeuvre par ordinateur comprenant :
le basculement du terminal final vers le mode d'économie de l'énergie électrique ;
le déclenchement de l'unité de traitement pour réaliser la mise à jour de masse colonne par colonne de la base de données, où le déclenchement de l'unité de traitement pour réaliser la mise à jour de masse colonne par colonne de la base de données comprend :
la création d'un cache des données dans la mémoire principale, où le cache des données est construit basé sur des rangées ;
en réponse à la réception d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception d'une opération de mise à jour (540) pour mettre à jour une rangée de données à mettre à jour dans la base de données, la réalisation de la mise à jour de la rangée de données à mettre à jour dans le cache des données (546) et dans le cas d'une insuffisance de cache lorsque le cache des données ne comprend pas la rangée de données à mettre à jour, avant de mettre à jour la rangée de données à mettre à jour dans le cache des données, l'exécution d'une opération de téléchargement (544) qui charge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ; et
où il s'avère que la mise à jour de la base de données est nécessaire lorsque le nombre total des rangées de données dans le cache des données dépasse une première valeur de seuil ;
le basculement du terminal final dans le mode standard de consommation de l'énergie électrique ;
et
le déclenchement de l'unité de traitement pour réaliser la mise à jour distincte de la base de données, où le déclenchement de l'unité de traitement pour réaliser la mise à jour distincte de la base de données comprend :
l'exécution de l'opération d'insertion pour insérer la rangée de données à ajouter à la base de données sur la base de données ; et
l'exécution de l'opération de mise à jour de la rangée de données à mettre à jour sur la base de données.

2. Procédé mis en oeuvre par ordinateur selon la revendication 1, dans lequel un terminal à distance comprend la base de données, où le terminal à distance est couplé de manière communicative avec le terminal final via un réseau de télécommunication digital cellulaire, où les opérations de téléchargement, les opérations de transcription de masse colonne par colonne, les opérations d'insertion, et les opérations de mise à jour sont réalisées via le réseau de télécommunication digital cellulaire, où le terminal final comprend en outre un terminal sans fil étant configuré pour coupler de manière communicative le terminal final au terminal à distance via le réseau de télécommunication digital cellulaire, où le terminal sans fil est dans un mode veille par défaut et dans un mode de transmission des données lorsque que l'une quelconque parmi les opérations suivantes est exécutée via le réseau de télécommunication digital cellulaire :
l'opération de téléchargement, l'opération de transcription de masse colonne par colonne, l'opération de mise à jour, et l'opération d'insertion, où une consommation de l'énergie électrique du terminal sans fil (116) dans le mode veille est inférieure à une consommation de l'énergie électrique du terminal sans fil dans le mode de transmission des données, où la consommation de l'énergie électrique du terminal final dans le mode d'économie de l'énergie électrique et dans le mode standard de consommation de l'énergie électrique comprend la consommation de l'énergie électrique du terminal sans fil dans le mode veille lorsque le terminal sans fil est dans le mode veille et la consommation de l'énergie électrique du terminal final dans le mode d'économie de l'énergie électrique et dans le mode standard de consommation de l'énergie électrique comprend la consommation de l'énergie électrique du terminal sans fil dans le mode de transmission des données lorsque le terminal sans fil est dans le mode de transmission des données.

3. Procédé mis en oeuvre par ordinateur selon la revendication 1 comprenant en outre :
après le basculement du terminal final dans le mode d'économie de l'énergie électrique, et avant le basculement du terminal final dans le mode normal de consommation de l'énergie électrique, l'exécution d'une opération de téléchargement de masse qui charge la base de données dans la mémoire principale, où dans l'étape de déclenchement de l'unité de traitement du procédé mis en oeuvre par ordinateur pour réaliser la mise à jour de masse colonne par colonne de la base de données, l'unité de traitement est déclenchée pour réaliser la mise à jour de masse colonne par colonne de la base de données chargée dans la mémoire principale.

4. Procédé mis en oeuvre par ordinateur selon la revendication 3, dans lequel un terminal à distance comprend la base de données chargée dans la mémoire principale, où le terminal à distance est couplé de manière communicative avec le terminal final via un réseau de télécommunication digital cellulaire, où les opérations de téléchargement de masse, les opérations d'insertion, et les opérations de mise à jour sont réalisées via le réseau de télécommunication digital cellulaire, où le terminal final comprend en outre un terminal sans fil (116) étant configuré pour coupler de manière communicative le terminal final au terminal à distance via le réseau de télécommunication digital cellulaire, où le terminal sans fil est dans un mode veille par défaut et dans un mode de transmission des données lorsque l'une quelconque des opérations suivantes est exécutée via le réseau de télécommunication digital cellulaire : l'opération de téléchargement de masse, l'opération de mise à jour, et l'opération d'insertion, où une consommation de l'énergie électrique du terminal sans fil dans le mode veille est inférieure à une consommation de l'énergie électrique du terminal sans fil dans le mode de transmission des données, où la consommation de l'énergie électrique du terminal final dans le mode d'économie de l'énergie électrique et dans le mode standard de consommation de l'énergie électrique comprend la consommation de l'énergie électrique du terminal sans fil dans le mode veille lorsque le terminal sans fil est dans le mode veille et la consommation de l'énergie électrique du terminal final dans le mode d'économie de l'énergie électrique et dans le mode standard de consommation de l'énergie électrique comprend la consommation de l'énergie électrique du terminal sans fil dans le mode de transmission des données lorsque le terminal sans fil est dans le mode de transmission des données.

5. Procédé mis en oeuvre par ordinateur selon l'une quelconque des revendications précédentes, dans lequel l'unité de traitement comprend un ou plusieurs microprocesseurs, où au moins l'un des microprocesseurs fonctionne dans un mode d'économie de l'énergie du microprocesseur lorsque le terminal final est basculé dans le mode d'économie de l'énergie électrique, où l'au moins un microprocesseur fonctionne à une première fréquence d'horloge lorsque l'au moins un microprocesseur fonctionne dans le mode d'économie de l'énergie du microprocesseur, où l'au moins un microprocesseur fonctionne à une seconde fréquence d'horloge lorsque l'au moins un microprocesseur ne fonctionne pas dans le mode d'économie de l'énergie du microprocesseur, où la seconde fréquence d'horloge est supérieure à la première fréquence d'horloge.

6. Procédé mis en oeuvre par ordinateur selon l'une des revendications 1 ou 3 précédentes, dans lequel le déclenchement de l'unité de traitement pour réaliser la mise à jour distincte de la base de données comprend en outre l'exécution d'une opération de suppression (520) d'une rangée de données à supprimer dans la base de données sur la base de données,
où le déclenchement de l'unité de traitement pour réaliser la mise à jour de masse colonne par colonne de la base de données comprend en outre :
en réponse à la réception de l'opération de suppression de la rangée des données à supprimer dans la base de données sur la base de données, l'exécution de l'opération de suppression de la rangée des données à supprimer dans le cache des données (524) dans le cas où le cache des données comprend la rangée des données à supprimer et la suppression de la rangée des données à supprimer dans la base de données (522) dans le cas où la base de données comprend la rangée des données à supprimer.

7. Procédé mis en oeuvre par ordinateur selon l'une quelconque des revendications précédentes, dans lequel chacune des rangées de données dans le cache des données a une valeur respective de statut étant égale à l'une des valeurs suivantes « Nouvelle » (452), « Ancienne Propre » (454), et « Ancienne Sale » (456) ;
où la valeur de statut de chacune des rangées de données insérée dans le cache des données est « Nouvelle » avant l'exécution de l'opération de transcription de masse colonne par colonne ;
où la valeur de statut de toutes les rangées de données est « Ancienne Propre » après l'exécution de l'opération de transcription de masse colonne par colonne ;
où la valeur de statut de chacune des rangées de données téléchargée dans le cache des données est « Ancienne Sale » avant la mise à jour de chacune des rangées de données téléchargée dans le cache des données ;
où la valeur de statut de chacune des rangées de données ayant la valeur du statut « Ancienne Propre » est changée en « Ancienne Sale » lorsque ladite rangée de données est mise à jour ;
où au moins une partie des rangées de données ayant la valeur de statut « Ancienne Propre » est supprimée lorsque le nombre total dépasse une seconde valeur de seuil.

8. Procédé mis en oeuvre par ordinateur selon l'une quelconque des revendications précédentes, dans lequel la base de données construite en colonnes comprend une base de données construite sur des colonnes de mémoire.

9. Procédé mis en oeuvre par ordinateur selon la revendication 7, dans lequel chacune des rangées de données dans la base de données et dans le cache des données comprend un ou plusieurs champs pour stocker les valeurs des données et une clé respective, chacune des rangées de données dans le cache des données a une valeur respective de statut qui est égale à l'une des valeurs suivantes « Nouvelle » (452), « Ancienne Propre » (454), et « Ancienne Sale » (456) ;
où la valeur de statut de chacune des rangées de données insérée dans le cache des données est « Nouvelle » avant l'exécution de l'opération de transcription de masse colonne par colonne ;
où la valeur de statut de toutes les rangées de données est « Ancienne Propre » après l'exécution de l'opération de transcription de masse colonne par colonne ;
où la valeur de statut de chacune des rangées de données téléchargée dans le cache des données est « Ancienne Sale » avant la mise à jour de chacune des rangées de données téléchargée dans le cache des données ;
où la valeur de statut de chacune des rangées de données ayant la valeur de statut « Ancienne Propre » est changée en « Ancienne Sale » après la mise à jour de ladite rangée de données dans le cas où la clé de ladite rangée de données reste inchangée lorsque ladite rangée de données est mise à jour ;
où la valeur de statut de chacune des rangées de données ayant soit la valeur du statut « Ancienne Propre », soit « Ancienne Sale », est changée en « Nouvelle » après la mise à jour de ladite rangée de données dans le cas où la clé de ladite rangée de données est mise à jour lorsque ladite rangée de données est mise à jour ;
où la clé de chacune des rangées de données dans le cache des données ayant la valeur de statut « Nouvelle » et de chacune des rangées de données dans la base de données identifie uniquement la chacune des rangées de données dans le cache des données ayant le statut « Nouvelle » et chacune des rangées de données dans la base de données, où chacun des champs est utilisé pour stocker moins de deux valeurs de données, chacun des champs a un nom respectif de champ, où chacune des rangées de données comprend uniquement des champs ayant différents noms, où les valeurs des données dans la base de données sont rassemblées dans les enregistrements de données par les noms de champ des champs dans lesquels elles sont stockées, où les valeurs des données dans le cache des données sont rassemblées en rangées de données par leurs clés respectives, où l'opération d'insertion est une insertion sous l'action d'une clé, l'opération de mise à jour est une mise à jour sous l'action d'une clé et l'opération de suppression est une suppression sous l'action d'une clé ;
où au moins une partie des rangées de données ayant la valeur de statut « Ancienne Propre » est supprimée lorsque le nombre total dépasse une troisième valeur de seuil.

10. Procédé mis en oeuvre par ordinateur selon la revendication 7, dans lequel chacune des rangées de données dans la base de données et dans le cache des données comprend un ou plusieurs champs pour stocker les valeurs des données et une clé respective, chacune des rangées de données dans la base de données est identifiée uniquement par sa clé respective, où chacun des champs est utilisé pour stocker moins de deux valeurs de données et chacun des champs a un nom de champ respectif, où chacune des rangées de données comprend seulement des champs ayant des noms différents, où les valeurs des données dans la base de données sont rassemblées dans les enregistrements des données par les noms de champ des champs dans lesquels elles sont stockées, où les valeurs des données dans le cache des données sont rassemblées dans des rangées de données par leurs clés respectives, où l'opération d'insertion est une insertion sous l'action d'une clé, l'opération de mise à jour est une mise à jour sous l'action d'une clé et l'opération de suppression est une suppression sous l'action d'une clé.

11. Procédé mis en oeuvre par ordinateur selon la revendication 10, où le déclenchement de l'unité de traitement pour réaliser la mise à jour de masse colonne par colonne est réalisée par l'exécution d'un traitement transactionnel de Langage de Requête Structurée (SQL), où une ou plusieurs transactions du traitement transactionnel comprennent au moins l'une des premières opérations suivantes : l'opération d'insertion, l'opération de mise à jour, l'opération de suppression, où il s'avère en outre que la mise à jour de la base de données est nécessaire dans les cas suivants : l'engagement d'une transaction simple comprenant l'au moins une des premières opérations est réalisé, avant l'exécution d'une opération de mise à jour par lots comprenant une pluralité d'opérations de mise à jour, avant l'exécution d'une opération de suppression par lots comprenant une pluralité d'opérations de suppression, avant l'exécution d'une requête générale SQL dans la base de données, ou avant l'exécution d'une procédure SQL stockée dans la base de données.

12. Procédé mis en oeuvre par ordinateur selon la revendication 10, où le déclenchement de l'unité de traitement pour réaliser la mise à jour de masse colonne par colonne est réalisée par l'exécution d'un traitement transactionnel de Langage de Requête Structurée (SQL), où une ou plusieurs transactions du traitement transactionnel comprennent au moins l'une des premières opérations suivantes : l'opération d'insertion, l'opération de mise à jour, l'opération de suppression, où il s'avère en outre que la mise à jour de la base de données est nécessaire dans les cas suivants : avant l'exécution d'une opération de mise à jour par lots comprenant une pluralité d'opérations de mises à jour, où le cache des données comprend au moins une rangée de données à mettre à jour lorsque la mise à jour par lots est exécutée, où l'au moins une rangée de données à mettre à jour a une valeur de statut égale à « Ancienne Sale » ; avant l'exécution d'une opération de suppression par lots comprenant une pluralité d'opérations de mises à jour, où le cache des données comprend au moins une rangée de données à supprimer lorsque la mise à jour par lots est exécutée, où l'au moins une rangée de données à supprimer a une valeur de statut égale à « Ancienne Sale » ; avant l'exécution d'une requête générale SQL dans la base de données et au moins une rangée de données dans le cache des données ayant une valeur de statut égale à « Ancienne Sale » ; ou avant l'exécution d'une procédure SQL stockée dans la base de données et au moins une rangée de données dans le cache des données ayant une valeur de statut égale à « Ancienne Sale ».

13. Procédé mis en oeuvre par ordinateur selon la revendication 10, dans lequel après la réception de l'opération d'insertion de la rangée de données à ajouter à la base de données et avant l'insertion de la rangée de données à ajouter à la base de données dans le cache des données, l'exécution de l'opération de transcription de masse colonne par colonne qui transcrit toutes les rangées de données dans le cache des données vers la base de données dans le cas où l'insertion de la rangée de données à ajouter à la base de données dans le cache des données avant l'exécution de l'opération de transcription de masse colonne par colonne qui transcrit toutes les rangées de données dans la base de données provoque la violation de l'identification unique des rangées de données par leurs clés respectives dans la base de données,
après la réception de l'opération de mise à jour de la mise à jour de la rangée de données à mettre à jour et avant la mise à jour de la rangée de données à mettre à jour dans le cache des données, l'exécution de l'opération de transcription de masse colonne par colonne qui écrit toutes les rangées de données dans le cache des données vers la base de données dans le cas où la mise à jour de la rangée de données à mettre à jour dans le cache des données avant l'exécution de l'opération de transcription de masse colonne par colonne qui transcrit toutes les rangées de données dans le cache des données vers la base de données provoque la violation de l'identification unique des rangées de données par leurs clés respectives dans la base de données.

14. Procédé mis en oeuvre par ordinateur selon la revendication 10, où le déclenchement de l'unité de traitement pour réaliser la mise à jour de masse colonne par colonne de la base de données comprend en outre :
la réception d'une requête au moyen d'une clé (510) en provenance d'une application fonctionnant sur le terminal final ;
dans le cas où la rangée de données correspondante étant uniquement identifiée par la clé spécifiée dans la requête de la clé n'est pas trouvée dans le cache des données (512), l'exécution d'une opération de téléchargement (514) qui télécharge la rangée de données qui est uniquement identifiée par la clé spécifiée dans la requête de la clé à partir de la base de données ; et
dans le cas où l'enregistrement correspondant est trouvé dans le cache transactionnel, le renvoi de l'enregistrement correspondant vers l'application (518).

15. Procédé mis en oeuvre par ordinateur de mise à jour de la base de données (128) utilisant un terminal final, où le serveur de la base de données comprend une unité de traitement, une mémoire principale et une base de données, où la base de données est construite par colonnes, où la base de données comprend des rangées de données, où le serveur de la base de données est configuré pour réaliser la mise à jour de la base de données dans un mode d'économie de l'énergie électrique et dans un mode standard de consommation de l'énergie électrique, où la consommation de l'énergie électrique du serveur final de la base de données dans le mode d'économie de l'énergie électrique est inférieure à la consommation de l'énergie électrique du serveur final de la base de données dans le mode standard de consommation de l'énergie électrique, où une mise à jour de masse colonne par colonne de la base de données est réalisée dans le mode d'économie de l'énergie électrique et la mise à jour distincte de la base de données est réalisée dans le mode normal de consommation de l'énergie électrique, le procédé mis en oeuvre par ordinateur comprenant :
le basculement du serveur de la base de données dans le mode d'économie de l'énergie électrique ;
le déclenchement de l'unité de traitement pour réaliser la mise à jour de masse des colonnes de la base de données, où le déclenchement de l'unité de traitement pour réaliser la mise à jour de masse colonne par colonne de la base de données comprend :
la création d'un cache des données dans la mémoire principale, où le cache des données est construit en rangées ;
en réponse à la réception en provenance du terminal final d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception en provenance du terminal final d'une opération de mise à jour (540) pour mettre à jour une rangée de données à mettre à jour dans la base de données, la mise à jour de la rangée de données à mettre à jour dans le cache des données (546) et, dans le cas d'une insuffisance de cache, lorsque le cache des données ne comprend pas la rangée de données à mettre à jour, avant de mettre à jour la rangée de données à mettre à jour dans le cache des données, l'exécution d'une opération de téléchargement (544) qui télécharge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ; et
où il s'avère que la mise à jour est nécessaire lorsque le nombre total des rangées de données dans le cache des données dépasse une première valeur de seuil ;
le basculement du serveur de la base de données dans le mode standard de consommation de l'énergie électrique ; et
le déclenchement de l'unité de traitement pour réaliser la mise à jour distincte de la base de données, où le déclenchement de l'unité de traitement pour réaliser la mise à jour distincte de la base de données comprend :
en réponse à la réception en provenance du terminal final d'une opération d'insertion pour insérer une rangée de données à ajouter à la base de données sur la base de données, l'exécution de l'opération d'insertion pour insérer la rangée de données à ajouter à la base de données sur la base de données ; et
en réponse à la réception en provenance du terminal final d'une opération de mise à jour pour mettre à jour une rangée de données à mettre à jour sur la base de données, l'exécution de l'opération de mise à jour de la rangée de données à mettre à jour sur la base de données.

16. Support lisible par ordinateur sur lequel est stocké un code exécutable par ordinateur pour être exécuté par un microprocesseur (114) commandant un terminal final, où l'exécution des instructions du code exécutable amène le microprocesseur à exécuter le procédé mis en oeuvre par ordinateur de mise à jour d'une base de données (128) en utilisant le terminal final comprenant le microprocesseur et une mémoire principale, où la base de données est construite en colonnes, où la base de données comprend des rangées de données, où le terminal final est configuré pour réaliser la mise à jour de la base de données dans un mode d'économie de l'énergie électrique et dans un mode standard de consommation de l'énergie électrique, où la consommation de l'énergie électrique du terminal final dans le mode d'économie de l'énergie électrique est inférieure à la consommation de l'énergie électrique du terminal final dans le mode standard de consommation de l'énergie électrique, où une mise à jour de masse colonne par colonne de la base de données est réalisée dans le mode d'économie de l'énergie électrique et une mise à jour distincte de la base de données est réalisée dans le mode normal de consommation de l'énergie électrique, le procédé mis en oeuvre par ordinateur comprenant :
le basculement du terminal final dans le mode d'économie de l'énergie électrique ;
le déclenchement du microprocesseur pour réaliser la mise à jour de masse colonne par colonne de la base de données, où le déclenchement du microprocesseur pour réaliser la mise à jour de masse colonne par colonne de la base de données comprend :
la création d'un cache des données dans la mémoire principale, où le cache des données est construit en rangées ;
en réponse à la réception d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception d'une opération de mise à jour (540) pour mettre à jour une rangée de données à mettre à jour dans la base de données, la mise à jour de la rangée de données à mettre à jour dans le cache des données et, dans le cas d'une insuffisance de cache lorsque le cache des données ne comprend pas la rangée de données à mettre à jour, avant de mettre à jour la rangée de données à mettre à jour dans le cache des données, l'exécution d'une opération de téléchargement qui télécharge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ; et
où il s'avère que la mise à jour de la base de données est nécessaire lorsque le nombre total des rangées de données dans le cache des données dépasse une première valeur de seuil ;
le basculement du terminal final dans le mode standard de consommation de l'énergie électrique ;
et
le déclenchement du microprocesseur pour réaliser la mise à jour distincte de la base de données, où le déclenchement du microprocesseur pour réaliser la mise à jour distincte de la base de données comprend :
l'exécution de l'opération d'insertion pour insérer la rangée de données à ajouter à la base de données sur la base de données ; et
l'exécution de l'opération de mise à jour de la rangée de données à mettre à jour sur la base de données.

17. Support lisible par ordinateur sur lequel est stocké un code exécutable par ordinateur pour être exécuté par un ou plusieurs microprocesseurs commandant un serveur de base de données (126), où l'exécution des instructions du code exécutable amène un ou plusieurs microprocesseurs à exécuter le procédé mis en oeuvre par ordinateur de mise à jour de la base de données (128), où le serveur de la base de données comprend le ou les plusieurs microprocesseurs et une mémoire principale, où la base de données est construite en colonnes, où la base de données comprend des rangées de données, où le serveur de la base de données est configuré pour réaliser la mise à jour de la base de données dans un mode d'économie de l'énergie électrique et en mode standard de consommation de l'énergie électrique, où la consommation de l'énergie électrique du serveur de la base de données dans un mode d'économie de l'énergie électrique est inférieure à la consommation de l'énergie électrique du serveur de la base de données dans un mode standard de consommation de l'énergie électrique, où une mise à jour de masse colonne par colonne de la base de données est réalisée dans le mode d'économie de l'énergie électrique et une mise à jour distincte de la base de données est réalisée dans le mode normal de consommation de l'énergie électrique, le procédé mis en oeuvre par ordinateur comprenant :
le basculement du serveur de la base de données dans le mode d'économie de l'énergie électrique ;
le déclenchement de l'un ou de plusieurs microprocesseurs pour réaliser la mise à jour de masse colonne par colonne de la base de données, où le déclenchement de l'un ou de plusieurs microprocesseurs pour réaliser la mise à jour de masse des colonnes de la base de données comprend :
la création d'un cache des données dans la mémoire principale, où le cache des données est construit en rangées ;
en réponse à la réception d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception d'une opération de mise à jour (540) pour mettre à jour une rangée de données à mettre à jour dans la base de données, la mise à jour de la rangée de données à mettre à jour dans le cache des données (546) et, dans le cas d'une insuffisance de cache lorsque le cache des données ne comprend pas la rangée de données à mettre à jour, avant de mettre à jour la rangée de données à mettre à jour dans le cache des données, l'exécution d'une opération de téléchargement (544) qui télécharge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ;
et
où il s'avère que la mise à jour de la base de données est nécessaire lorsque le nombre total des rangées de données dans le cache des données dépasse une première valeur de seuil ;
le basculement du serveur de la base de données dans le mode standard de consommation de l'énergie électrique ;
et
le déclenchement de l'un ou de plusieurs microprocesseurs pour réaliser la mise à jour distincte de la base de données, où le déclenchement de l'un ou de plusieurs microprocesseurs pour réaliser la mise à jour distincte de la base de données comprend :
l'exécution de l'opération d'insertion pour insérer la rangée de données à ajouter à la base de données sur la base de données ; et
l'exécution de l'opération de mise à jour de la rangée de données à mettre à jour sur la base de données.

18. Terminal final configuré pour réaliser la mise à jour d'une base de données (128) dans un mode d'économie de l'énergie électrique et dans un mode standard de consommation de l'énergie électrique, où une consommation de l'énergie électrique du terminal final dans le mode d'économie de l'énergie électrique est inférieure à une consommation de l'énergie électrique du terminal final dans le mode standard de consommation de l'énergie électrique, où le terminal final comprend une unité de traitement (114) et une mémoire principale, où la base de données est construite en colonnes, où une mise à jour de masse colonne par colonne de la base de données est réalisée dans le mode d'économie de l'énergie électrique et une mise à jour distincte de la base de données est réalisée dans le mode normal de consommation de l'énergie électrique, où l'unité de traitement est configurée pour amener le terminal final à réaliser les actions suivantes :
le basculement du terminal final dans le mode d'économie de l'énergie électrique ;
le déclenchement du terminal final pour réaliser la mise à jour de masse colonne par colonne de la base de données, où le déclenchement du terminal final pour réaliser la mise à jour de masse colonne par colonne de la base de données comprend :
la création d'un cache des données dans la mémoire principale, où le cache des données est construit en rangées ;
en réponse à la réception d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception d'une opération de mise à jour (540) pour mettre à jour une rangée de données à mettre à jour dans la base de données, la mise à jour de la rangée de données à mettre à jour dans le cache des données (546) et, dans le cas d'une insuffisance de cache lorsque le cache des données ne comprend pas la rangée de données à mettre à jour, avant de mettre à jour la rangée de données à mettre à jour dans le cache des données, l'exécution d'une opération de téléchargement (544) qui télécharge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ;
et
où il s'avère que la mise à jour de la base de données est nécessaire lorsque le nombre total des rangées de données dans le cache des données dépasse une première valeur de seuil ;
le basculement du terminal final dans le mode standard de consommation de l'énergie électrique ;
et
le déclenchement du terminal final pour réaliser la mise à jour distincte de la base de données, où le déclenchement de l'unité de traitement pour réaliser la mise à jour distincte de la base de données comprend :
l'exécution de l'opération d'insertion pour insérer la rangée de données à ajouter à la base de données sur la base de données ; et
l'exécution de l'opération de mise à jour de la rangée de données à mettre à jour sur la base de données.

19. Serveur de base de données configuré pour réaliser la mise à jour d'une base de données (128) dans un mode d'économie de l'énergie électrique et dans un mode standard de consommation de l'énergie électrique, où la consommation de l'énergie électrique du serveur de la base de données dans le mode d'économie de l'énergie électrique est inférieure à la consommation de l'énergie électrique du serveur de la base de données dans le mode standard de consommation de l'énergie électrique, où le serveur de la base de données comprend une unité de traitement et une mémoire principale, où la base de données est construite en colonnes, où la mise à jour de masse colonne par colonne de la base de données est réalisée dans le mode d'économie de l'énergie électrique et la mise à jour distincte de la base de données est réalisée dans le mode normal de consommation de l'énergie électrique, l'unité de traitement est configurée pour réaliser les actions suivantes :
le basculement du serveur de la base de données dans le mode d'économie de l'énergie électrique ;
le déclenchement du serveur de la base de données pour réaliser la mise à jour de masse colonne par colonne de la base de données, où le déclenchement du serveur de la base de données pour réaliser la mise à jour de masse colonne par colonne de la base de données comprend :
la création d'un cache des données dans la mémoire principale, où le cache des données est construit en rangées ;
en réponse à la réception d'une opération d'insertion (530) pour l'insertion d'une rangée de données à ajouter à la base de données, l'insertion de la rangée de données à ajouter à la base de données dans le cache des données (532), où la rangée de données à ajouter à la base de données est insérée dans la base de données lorsqu'il s'avère qu'une mise à jour de la base de données est nécessaire ;
en réponse à la réception d'une opération de mise à jour (540) pour mettre à jour une rangée de données à mettre à jour dans la base de données, la mise à jour de la rangée de données à mettre à jour dans le cache des données (546) et, dans le cas d'une insuffisance de cache lorsque le cache des données ne comprend pas la rangée de données à mettre à jour, avant de mettre à jour la rangée de données à mettre à jour dans le cache des données, l'exécution d'une opération de téléchargement (544) qui télécharge la rangée de données à mettre à jour dans le cache des données à partir de la base de données, où la rangée de données à mettre à jour est mise à jour dans la base de données lorsqu'il s'avère que la mise à jour de la base de données est nécessaire ; et
dans le cas où il s'avère que la mise à jour de la base de données est nécessaire (552), l'exécution d'une opération de transcription de masse colonne par colonne (554) qui transcrit toutes les rangées de données dans le cache des données vers la base de données ;
et
où il s'avère que la mise à jour de la base de données est nécessaire lorsque le nombre total des rangées de données dans le cache des données dépasse une première valeur de seuil ;
le basculement du serveur de la base de données dans le mode standard de consommation de l'énergie électrique ;
et
le déclenchement du serveur de la base de données pour réaliser la mise à jour distincte de la base de données, où le déclenchement du serveur de la base de données pour réaliser la mise à jour distincte de la base de données comprend :
l'exécution de l'opération d'insertion pour insérer la rangée de données à ajouter à la base de données sur la base de données ; et
l'exécution de l'opération de mise à jour de la rangée de données à mettre à jour sur la base de données.
